(19)

(11) **EP 3 710 805 B1**

(12) **EUROPÄISCHE PATENTSCHRIFT**

(45) Veröffentlichungstag und Bekanntmachung des Hinweises auf die Patenterteilung:
**03.11.2021 Patentblatt 2021/44**

(21) Anmeldenummer: **18803394.8**

(22) Anmeldetag: **12.11.2018**

(51) Int Cl.:
***G01M 13/028*** *(2019.01)* ***G01M 13/045*** *(2019.01)*

(86) Internationale Anmeldenummer:
**PCT/EP2018/080924**

(87) Internationale Veröffentlichungsnummer:
**WO 2019/092240 (16.05.2019 Gazette 2019/20)**

# (54) VORRICHTUNG UND VERFAHREN ZUM ROTATIONSSYNCHRONEN ÜBERWACHEN EINES ROTIERENDEN ELEMENTS

APPARATUS AND METHOD FOR THE ROTATION-SYNCHRONOUS MONITORING OF A ROTATING ELEMENT

DISPOSITIF ET PROCÉDÉ DE SURVEILLANCE SYNCHRONE EN ROTATION D’UN ÉLÉMENT EN ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.11.2017 DE 102017220179**

(43) Veröffentlichungstag der Anmeldung:
**23.09.2020 Patentblatt 2020/39**

(73) Patentinhaber: **Fraunhofer-Gesellschaft zur Förderung der angewandten Forschung e.V.**
**80686 München (DE)**

(72) Erfinder: **HUSAR, Peter**
**98693 Ilmenau (DE)**

(74) Vertreter: **Schenk, Markus**
**Schoppe, Zimmermann, Stöckeler Zinkler, Schenk & Partner mbB**
**Patentanwälte**
**Radlkoferstrasse 2**
**81373 München (DE)**

(56) Entgegenhaltungen:
**US-A1- 2014 352 444** **US-B2- 9 032 803**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Vorrichtung zum Überwachen eines rotierenden Elements, ein entsprechendes Verfahren zum Überwachen eines rotierenden Elements und ein Computerprogramm mit einem Programmcode zur Durchführung des Verfahrens zum Überwachen eines rotierenden Elements.

Beispielsweise kann es sich hierbei um eine Anordnung und ein Verfahren zur ordnungsbasierten Vibrationsanalyse rotierender Teile handeln.

Die Erfindung kann beispielsweise im Bereich der Sensorik und Diagnostik von rotierenden Teilen von Maschinen mit besonders schwachen durch Defekte ausgelösten rotationsabhängigen Schwingungen eingesetzt werden.

Die bisherige Diagnostik für die Zustandsüberwachung von Maschinen und Detektion von Defekten basiert auf der Erfassung von Körperschall und seiner Auswertung.

Die Vibrationen werden meistens mittels mechanoelektrischer oder optischer Wandler direkt oder kontaktlos von der Oberfläche der Maschine aufgenommen, zum Teil werden auch Laser zur kontaktfreien Erfassung des Körperschalls verwendet (Lasermikrofon). Ein wichtiges diagnostisches Mittel ist das sogenannte Ordnungsspektrum, welches eine Variante des konventionellen Frequenzspektrums ist und zur Skalierung der üblichen Frequenzachse die Drehzahl verwendet.

Die spektrale Zusammensetzung wird dabei jedoch nicht über die physische Schwingfrequenz berechnet - wie in der Fourieranalyse üblich - sondern über die Schwingungsordnung. Dabei ist die tatsächliche Frequenz der Ordnung generell zeitvariabel, so dass bisher eine Umrechnung der physischen Frequenz in die Ordnung notwendig ist.

Durch die ordnungsbasierte Analyse sind Defekte von rotierenden Teilen an Hand der auf die aktuelle Drehzahl normierten Frequenz oder Zeit detektierbar und daher von der (konstanten) absoluten Frequenz sonstiger Störungen und des umliegenden Rauschens unabhängig.

Üblicherweise wird zur Erfassung des Körperschalls konventionelle Sensortechnik (Beschleunigungssensoren, Geschwindigkeitssensoren, Schallsensoren, Lasermikrofone) eingesetzt und die mechanischen Schwingungen werden mit einer für den Schallbereich angemessenen konstanten Rate (Grundfrequenz von 10 kHz bis 50 kHz) abgetastet. Da das Ordnungsspektrum eine zeitliche Dynamik über bis zu drei spektrale Dekaden erreichen kann (Ordnung = 0,1 bis 100), ist die Detektierbarkeit von Defekten stark davon abhängig, welche konkrete Drehzahl vorliegt.

Daraus folgt, dass das konventionelle Spektrum nach einer zeitlich äquidistanten Abtastung im Zeitbereich zur Rotationsanalyse zwar gute Ergebnisse liefert, allerdings können nur Signale mit einem Signal Rauschabstand SNR (engl. Signal to Noise Ratio) von mindestens +10 dB detektiert werden.

Man versucht heute zwar die spektrale Dynamik durch transformationsorientierte Methoden zurück zu gewinnen, doch das Problem der äquidistanten Abtastung (zeitliche Diskretisierung) kann nachträglich nicht mehr oder nur begrenzt gelöst werden.

So beschreibt beispielsweise die deutsche Patentanmeldung mit der Anmeldenummer 10 2017 200 761.3 eine gattungsgemäße Vorrichtung sowie ein gattungsgemäßes Verfahren zur Überwachung eines rotierenden Elements mittels Ordnungsdetektion, die auch als Hüllkurvendemodulation bezeichnet werden kann. Hier wird äquidistant abgetastet. Allerdings kann der SNR mittels Korrelation des Vibrationssignals $x(t)$ mit einer zeitabhängigen Analysefunktion $h(t)$ angehoben werden. Optional kann die zeitabhängige Analysefunktion $h(t)$ mit einer Zeitkonstanten T kombiniert werden. Somit können Signale mit einem SNR von weniger als +10 dB analysiert werden.

Weiterer Stand der Technik ist in der US 9 032 803 B2 offenbart. Diese Druckschrift beschreibt ein Verfahren zur Detektion von Schäden in Kugellagern, die an einer Welle angebracht sind. Dieses Verfahren beinhaltet das Erfassen eines Vibrationssignals, das in ein Frequenzsignal umgewandelt wird. Die Amplituden der Spektrallinien werden gemittelt und das dabei erhaltene, für das jeweilige Kugellager charakteristische, Vibrationssignal wird mit einem Referenz-Vibrationssignal eines ordnungsgemäß arbeitenden Kugellagers verglichen. So können Schäden an dem jeweiligen Lager detektiert werden.

Die US 2014 / 352 444 A1 beschreibt ebenfalls ein Verfahren zur Detektion von Schäden mittels Vibrationsanalyse. Hier werden zwei unterschiedliche Drehzahlen verwendet, die von zwei unterschiedlichen mechanischen Komponenten abgegriffen werden. Ein zeitliches Vibrationssignal E1 wird dabei zweimal abgetastet. Dies geschieht mit zwei unterschiedlichen Drehzahlen von zwei unterschiedlichen mechanischen Bauelementen.

Der vorliegenden Erfindung liegt die Aufgabe zugrunde, bestehende Vorrichtungen und Verfahren weitergehend zu verbessern, indem der SNR in Signalen, die von einem rotierenden Element ausgehen, verbessert wird, um somit auch Störgrößen mit kleinen Signalamplituden sicher und eindeutig identifizieren zu können.

Diese Aufgabe wird erfindungsgemäß mit einer Vorrichtung mit den Merkmalen von Anspruch 1, mit einem Verfahren mit den Merkmalen von Anspruch 12 sowie mit einem Computerprogramm mit den Merkmalen von Anspruch 15 gelöst.

Die erfindungsgemäße Vorrichtung weist unter anderem einen Signaleingang auf, der ausgebildet ist, um ein von dem rotierenden Element ausgehendes zeitabhängiges Vibrationssignal $s(t)$ und ein Drehzahlsignal $f_B$ des rotierenden Elements zu empfangen. Das Vibrationssignal $s(t)$ kann beispielsweise von einem gewöhnlichen Vibrationsdetektor aufgezeichnet und an den Signaleingang weitergeleitet werden. Bei dem Vibrationssignal s(t) kann es sich beispielsweise um ein Körperschallsignal handeln, dass mittels eines Körperschalldetektors aufgezeichnet wird. Das Drehzahlsignal $f_B$ ist ein zeitlich variables Drehzahlsignal und kann mittels eines gewöhnlichen Drehzahlmessers gemessen und an den Signaleingang weitergeleitet werden. Hierbei kann es sich beispielsweise um Inkrementalgeber oder Absolutwertgeber handeln. Das Drehzahlsignal $f_B$ repräsentiert die gemessenen Umdrehungen des rotierenden Elements pro Zeiteinheit und wird in der Regel in der Einheit 1/T, d.h. mit Anzahl der Umdrehungen pro Minute (U/min) angegeben. Die Drehzahl, beziehungsweise das die Drehzahl repräsentierende Drehzahlsignal $f_B$, kann somit auch als Drehfrequenz $f_B$ bezeichnet werden. Ferner weist die erfindungsgemäße Vorrichtung eine Signalmodifizierungsvorrichtung auf, die ausgebildet ist, um das Drehzahlsignal $f_B$ zu modifizieren und ein modifiziertes Drehzahlsignal $f_A$ auszugeben. Die erfindungsgemäße Vorrichtung weist außerdem eine Abtastvorrichtung auf, die ausgebildet ist, um das zeitabhängige Vibrationssignal s(t) unter Verwendung des modifizierten Drehzahlsignals $f_A$ als Abtastrate abzutasten und ein zeitdiskretes Vibrationssignal $s_A(n)$ zu erzeugen. Erfindungsgemäß ist das modifizierte Drehzahlsignal $f_A$ ein mit einem reellwertigen Faktor N multipliziertes Vielfaches des Drehzahlsignals $f_B$. Die modifizierte Abtastrate $f_A$ ist somit ein reellwertiges Vielfaches des ursprünglichen Drehzahlsignals $f_B$, sodass das mit dieser modifizierten Abtastrate $f_A$ abgetastete zeitdiskrete Vibrationssignal $s_A(n)$ mit der Drehzahl des rotierenden Elements stets synchronisiert ist. Das heißt, das zeitdiskrete Vibrationssignal $s_A(n)$ wird erfindungsgemäß von der Variabilität der Drehzahl des rotierenden Elements entkoppelt bzw. davon unabhängig. Im Ergebnis erscheint das zeitdiskrete Vibrationssignal $s_A(n)$ über die veränderliche Drehzahl betrachtet als stationär und wird deshalb auch als quasi-stationär bezeichnet. Dies gilt insbesondere für spektrale Signalanteile des zeitdiskreten Vibrationssignals $s_A(n)$.

Ferner weist die erfingungsgemäße Vorrichtung eine zweite Signalmodifizierungsvorrichtung auf, welche ausgestaltet ist, um das Drehzahlsignal $f_B$ zu modifizieren und ein zweites modifiziertes Drehzahlsignal $f_{A2}$ auszugeben, wobei das zweite modifizierte Drehzahlsignal $f_{A2}$ ein mit einem zweiten reellwertigen Faktor $N_2$ multipliziertes Vielfaches des Drehzahlsignals $f_B$ ist.

Mittels der vorliegenden Erfindung wird es also ermöglicht, eine Analyse des Vibrationssignals unabhängig von Drehzahlschwankungen des rotierenden Elements durchzuführen. Die Erfindung basiert unter anderem darauf, Vibrationssignale, zum Beispiel den Körperschall, eines rotierenden Elements mit einer Rate abzutasten, die der aktuellen Drehzahl des rotierenden Elements proportional ist. Beispielsweise können die von dem rotierenden Element ausgehenden Vibrationen 100 mal während einer Umdrehung abgetastet werden, unabhängig davon, wie lange die Umdrehung dauert. Dadurch wird erreicht, dass die Basisinformationen zur Berechnung des Ordnungsspektrums von der aktuellen Drehzahl nicht mehr abhängig sind, da diese aus Sicht der Spektralanalyse konstant erscheint.

Es kann mit der vorliegenden Erfindung also eine drehzahlabhängige Analyse, zum Beispiel eine Ordnungsanalyse, durchgeführt werden. Dabei kann, muss aber nicht, das Vibrationssignal des rotierenden Elements in äquidistanten Schritten abgetastet werden. Eine äquidistante Abtastung wird sich in der Regel nur dann ergeben, wenn sich die Drehzahl des rotierenden Elements im Betrachtungszeitraum nicht ändert. In der Regel ändert sich bei einem zu untersuchenden rotierenden Element innerhalb eines betrachteten Zeitraums aber die Drehzahl des rotierenden Elements. In diesem Fall wird erfindungsgemäß nicht in äquidistanten Schritten abgetastet. Stattdessen wird erfindungsgemäß in zeitvariablen Schritten abgetastet, wobei sich die Abtastrate nach der aktuellen Drehzahl des rotierenden Elements richtet. Das heißt, ändert sich die Drehzahl des rotierenden Elements, so ändert sich erfindungsgemäß auch die Abtastrate. Die Abtastrate wird also erfindungsgemäß in Abhängigkeit der aktuellen Drehzahl des rotierenden Elements bestimmt. Somit ergibt sich der entscheidende Vorteil gegenüber den aus dem Stand der Technik bekannten äquidistanten Abtastungen, nämlich dass die Analyse der Störgrößen im Vibrationssignal des rotierenden Elements vollkommen drehzahlunabhängig erfolgen kann. Man kann somit den SNR des Vibrationssignals deutlich gegenüber konventionellen Verfahren erhöhen. Im Mittel erhält man eine Verbesserung des SNR um etwa 20 dB, mit Spitzenwerten von bis zu 60 dB Verbesserung des SNR gegenüber konventionellen Verfahren, die mit äquidistanter Abtastung arbeiten.

Gemäß eines Ausführungsbeispiels kann die Vorrichtung eine Auswertevorrichtung aufweisen, die ausgebildet ist, um eine Ordnungsanalyse des zeitdiskreten Vibrationssignals $s_A(n)$ auszuführen und dabei mindestens eine Ordnung des zeitdiskreten Vibrationssignals $s_A(n)$ zu bestimmen, um hierüber eine Aussage über den Zustand des rotierenden Elements zu ermitteln. Die Ordnungen im Ordnungsspektrum erscheinen erfindungsgemäß drehzahlunabhängig, da das Vibrationssignal und deren Ordnungen mit der Drehzahl synchronisiert sind. Diese Synchronisierung beziehungsweise Entkopplung von der Drehzahl ermöglicht eine Verbesserung des SNR der einzelnen Ordnungen von 10 dB bis etwa 60 dB gegenüber äquidistant abgetasteten Vibrationssignalen. Im Vergleich zu konventionellen Frequenzspektren kann mittels des Ordnungsspektrums eine wesentlich genauere Identifizierung der Störgrößen vorgenommen werden. Das heißt es können erheblich betragskleinere Störgrößen identifiziert werden als dies bisher mit konventionellen äquidistant abgetasteten Frequenzspektren möglich ist.

Erfingungsgemäß ist die Signalmodifizierungsvorrichtung ausgebildet, um das Drehzahlsignal $f_B$ unter Anwendung der Formel $f_A = N \cdot f_B$ zu modifizieren, wobei

$N$ ein reellwertiger Faktor und $f_A$ das modifizierte Drehzahlsignal ist.

Gemäß dieser Formel ist also das modifizierte Drehzahlsignal $f_A$ ein mit einem reellwertigen Faktor $N$ multipliziertes Vielfaches des Drehzahlsignals $f_B$, sodass das zeitdiskrete Vibrationssignal $s_A(n)$ drehzahlsynchron mit den Umdrehungen des rotierenden Elements abgetastet ist. Der reellwertige Faktor $N$ kann ganze Zahlen sowie rationale Zahlen aufweisen. Somit kann unter einem Vielfachen des Drehzahlsignals $f_B$ sowohl ein echt ganzzahliges Vielfaches als auch ein Bruchteil des Drehzahlsignals $f_B$ verstanden werden.

Gemäß eines weiteren Ausführungsbeispiels kann sich der reellwertige Faktor $N$ nach der maximal zu untersuchenden Ordnung und/oder nach den höchsten zu erwartenden akustischen Spektralanteilen richten, wobei der reellwertige Faktor $N$ kleiner als 100, oder bevorzugt kleiner als 20 ist. Da der Faktor $N$ die Bandbreite des abzutastenden Vibrationssignals s(t) und damit indirekt auch den SNR bestimmt, sollte er kleiner als 100 und bevorzugt kleiner als 20 gewählt werden. Somit wird ein guter SNR erreicht. Außerdem sinkt der SNR mit steigender Ordnung. Bei der Wahl des Faktors $N$ im hier angegebenen Bereich kann man die Bandbreite und somit die Datenmenge erheblich reduzieren. Das heißt, es entsteht ein möglichst geringer Overhead.

Gemäß eines weiteren Ausführungsbeispiels kann die Vorrichtung ausgebildet sein, um das zeitdiskrete Vibrationssignal $s_A(n)$ innerhalb eines Zeitraums zu erzeugen, in dem sich die Drehzahl des rotierenden Elements ändert. Dabei können Drehzahlschwankungen im Bereich von mehreren hundert oder auch tausend Umdrehungen pro Minute verarbeitet werden. Da die Abtastung des Vibrationssignals erfindungsgemäß drehzahlabhängig variiert, ist das resultierende abgetastete zeitdiskrete Vibrationssignal $s_A(n)$ drehzahlsynchron beziehungsweise unabhängig von der Variabilität der Drehzahl. Das zeitdiskrete Vibrationssignal $s_A(n)$ erscheint somit trotz teils großen Änderungen der Drehzahl als konstant. Im Gegensatz dazu liefern konventionelle Methoden mit äquidistanter Abtastung nur bei einer bekannten und konstanten Drehzahl aussagekräftige Ergebnisse.

Gemäß eines weiteren Ausführungsbeispiels kann die Vorrichtung ferner ein Tiefpassfilter aufweisen, wobei das Tiefpassfilter in Signalrichtung zwischen dem rotierenden Element und der Abtastvorrichtung angeordnet ist, und wobei das Tiefpassfilter ausgebildet ist, um das zeitabhängige Vibrationssignal s(t) des rotierenden Elements zu filtern und daraus ein tiefpassgefiltertes Vibrationssignal $s_{TP}(t)$ zu erzeugen. Dieses tiefpassgefilterte Vibrationssignal $s_{TP}(t)$ kann dann mittels der Abtastvorrichtung in der oben beschriebenen Art und Weise, d.h. mit dem modifizierten Drehzahlsignal beziehungsweise mit der modifizierten Frequenz $f_A$, abgetastet werden. Das Tiefpassfilter kann auch als ein Antialiasingfilter bezeichnet werden. Für einen guten SNR, der notwendig ist, um auch Signale von sehr schwachen Defekten zu detektieren, kann das Vibrationssignal s(t) in dessen Bandbreite mittels des Tiefpassfilters nach oben begrenzt werden. Diese Maßnahme kommt vor allem den sehr tieffrequenten Signalen zugute, bei denen zwar die statistikbasierte SNR-Verbesserung relativ schlecht ist (Varianzreduktion abhängig von der Anzahl der Samples; niedrige Abtastrate, daher wenig Rauschreduktion), aber wegen ihrer tiefen Frequenzen das Spektrum stark beschränkt werden kann.

Gemäß eines weiteren Ausführungsbeispiels kann das Tiefpassfilter eine Grenzfrequenz $f_G(t) = R_{max} \cdot f_A(t)$ aufweisen. Hierbei ist $f_G(t)$ die zeitabhängige Grenzfrequenz des Tiefpassfilters, $f_A(t)$ ist das zeitabhängige Drehzahlsignal des rotierenden Elements und $R_{max}$ ist ein Maximalwert einer Ordnung in einem Ordnungsspektrum. Dabei gilt für den Faktor $R_{max}$ die Bedingung $R_{max} < N/2$ wobei $N$ der reellwertige Faktor ist, der auch zum Modifizieren der Abtastrate verwendet wird. Auch in diesem Fall kann der Faktor N kleiner als 100, oder aber auch kleiner als 20 sein. Erfindungsgemäß ist also das Tiefpassfilter mit der Drehzahl des rotierenden Elements variabel, das heißt dessen Grenzfrequenz ist einstellbar in Abhängigkeit von der aktuellen Drehzahl des rotierenden Elements.

Es ist denkbar, dass bereits Daten einer früheren Vibrationsmessung des rotierenden Geräts vorliegen, oder dass die Vibrationssignale mittels herkömmlicher Verfahren ermittelt werden. Als Datensatz läge dann beispielsweise ein äquidistant abgetastetes Vibrationssignal x(n) vor. Auch derartige äquidistant abgetasteten zeitdiskreten Signale x(n) können mit der erfindungsgemäßen Vorrichtung beziehungsweise mit dem erfindungsgemäßen Verfahren verarbeitet werden. Gemäß eines solchen Ausführungsbeispiels der Erfindung kann die Vorrichtung nämlich dazu ausgebildet sein, um ein derartiges mit einer äquidistanten Abtastrate $f_S$ abgetastetes zeitdiskretes Vibrationssignal x(n) mit einer Grundfrequenz $f_a$ abzutasten, die mit einem reellwertigen Oversampling-Faktor OS skaliert ist. Dabei gilt für die Grundfrequenz $f_a = OS \cdot f_S$. Mittels dieser Überabtastung wird aus dem vorliegenden äquidistant abgetasteten Vibrationssignal x(n) ein überabgetastetes Vibrationssignal $x_{OS}(n)$ erzeugt. Es wird durch diese Überabtastung sozusagen aus dem zeitdiskreten Vibrationssignal x(n) ein quasi-analoges Vibrationssignal $x_{OS}(n)$ erzeugt. Das heißt, das überabgetastete Vibrationssignal $x_{OS}(n)$ ist zwar immer noch zeitdiskret, aber aufgrund der vielen Stützstellen kann es wie ein zeitkontinuierliches analoges Signal betrachtet werden. Dabei kann die Abtastvorrichtung erfindungsgemäß dazu ausgebildet sein, um dieses überabgetastete Vibrationssignal $x_{OS}(n)$ wie das zeitabhängige Vibrationssignal s(t) zu behandeln. Das heißt, das überabgetastete Vibrationssignal xos(n) wird unter Verwendung der modifizierten Abtastfrequenz $f_A$ drehzahlabhängig mittels der Abtastvorrichtung abgetastet, sodass ein Ausgangssignal $s_A(n)$ daraus resultiert, welches wiederum mit der Drehzahl synchronisiert ist. In anderen Worten kann also der Signaleingang ausgebildet sein, um ein dem rotierenden Element zugeordnetes zeitdiskretes Vibrationssignal x(n) und ein Drehzahlsignal $f_B$ des rotierenden Elements zu empfangen. Das zeitdiskrete Vibrationssignal x(n) kann anschließend, wie oben beschrieben, überabgetastet werden. Es ist aber auch denkbar, dass der Signaleingang bereits ein entsprechend überabgetastetes Signal $x_{OS}(n)$ empfängt. Die Signalmodifizierungsvorrichtung kann ausgebildet sein, um das Drehzahlsignal $f_B$ zu modifizieren und ein modifiziertes Drehzahlsignal $f_A$ auszugeben. Die Abtastvorrichtung kann ausgebildet sein, um das überabgetastete Vibrationssignal xos(n) unter Verwendung des modifizierten Drehzahlsignals $f_A$ als Abtastrate abzutasten und ein zeitdiskretes Vibrationssignal $s_A(n)$ zu erzeugen. Auch in diesem Fall ist erfindungsgemäß vorgesehen, dass das modifizierte Drehzahlsignal $f_A$ ein mit einem reellwertigen Faktor N multipliziertes Vielfaches des Drehzahlsignals $f_B$ ist. Damit wird das zeitdiskrete Vibrationssignal $s_A(n)$ mit der Drehzahl des rotierenden Elements synchronisiert.

Gemäß eines weiteren Ausführungsbeispiels kann der Oversampling-Faktor OS derart gewählt sein, dass die Grundfrequenz $f_a$ mindestens 1 MHz aufweist. Der Oversampling-Faktor kann beispielsweise im Bereich zwischen 10 und 100 gewählt werden. Dadurch wird erreicht, dass das vorliegende äquidistant abgetastete Vibrationssignal x(n), wie oben beschrieben, als quasi-analog betrachtet werden kann.

Vorteilhafter Weise kann mittels der erfindungsgemäßen Vorrichtung beziehungsweise mit dem erfindungsgemäßen Verfahren eine sogenannte bispektrale Analyse durchgeführt werden. Bei der bispektralen Analyse wird aus einem Ordnungsspektrum seine zweidimensionale spektrale Korrelationsfunktion berechnet. Zeigen sich bei der Korrelation der Ordnungsspektren Überschneidungen in deren jeweiligen Ordnungen, so ist dies ein Hinweis auf eine Defektquelle in dem rotierenden Element. Mittels der bispektralen Ordnungsanalyse kann sogar die Anzahl der Defektquellen bestimmt werden. Eine solche bispektrale Analyse funktioniert auch in der Praxis nur bei echt stationären Signalen. Sie wäre daher auf das Originalsignal beziehungsweise bei nach dem Stand der Technik äquidistant abgetasteten Signalen gar nicht anwendbar, da dieses extrem dynamisch ist. Nur durch den Erfindungsaspekt der drehzahlabhängigen Abtastung werden die Ordnungssignale für das Bispektrum faktisch stationär, so dass eine zuverlässige Funktionsdiagnostik über beliebig lange Zeitabschnitte möglich wird. Gemäß eines derartigen Ausführungsbeispiels kann die erfindungsgemäße Vorrichtung eine Auswertevorrichtung aufweisen, die ausgebildet ist, um eine bispektrale Ordnungsanalyse des drehzahlsynchronen zeitdiskreten Vibrationssignals $s_A(n)$ auszuführen und dabei mindestens zwei Ordnungsspektren des drehzahlsynchronen zeitdiskreten Vibrationssignals $s_A(n)$ miteinander zu korrelieren, um mittels der bispektralen Ordnungsanalyse eine Aussage über eine Anzahl von Defektquellen des rotierenden Elements zu ermitteln.

Ausführungsbeispiele der Erfindung sind in der Zeichnung dargestellt und werden nachstehend erläutert. Es zeigen:

Fig. 1 ein schematisches Blockschaltbild einer beispielhaften Vorrichtung zum Überwachen eines rotierenden Elements,

Fig. 2 ein Zeit-Frequenz-Diagramm eines beispielhaften Vibrationssignals einer rotierenden Maschine,

Fig. 3 ein Ordnungsspektrum, wie es mit konventionellen Methoden nach dem Stand der Technik erzeugbar ist,

Fig. 4 ein Ordnungsspektrum, wie es mit der vorliegenden Erfindung erzeugbar ist,

Fig. 5A ein Blockschaltbild einer weiteren beispielhaften Vorrichtung zum Überwachen eines rotierenden Elements,

Fig. 5B ein Blockschaltbild einer Ausführungsform einer erfindungsgemäßen Vorrichtung,

Fig. 6 ein Ordergramm zur Darstellung von Ordnungen über die Drehzahl, wie es mit der vorliegenden Erfindung erzeugbar ist,

Fig. 7 ein Ordnungs-Bispektrum zur Signalanalyse gemäß einer Ausführungsform des erfindungsgemäßen Verfahrens,

Fig. 8A ein Zeit-Frequenz-Diagramm eines beispielhaften Vibrationssignals einer rotierenden Maschine,

Fig. 8B ein Ordergramm zur Darstellung von Ordnungen über die Drehzahl, wie es mit der vorliegenden Erfindung erzeugbar ist,

Fig. 8C ein Ordnungs-Bispektrum zur Signalanalyse gemäß einer Ausführungsform des erfindungsgemäßen Verfahrens, und

Fig. 9 ein Blockschaltbild eines erfindungsgemäßen Verfahrens zum Überwachen eines rotierenden Elements.

Im Folgenden werden bevorzugte Ausführungsbeispiele der Erfindung mit Bezug auf die Figuren näher beschrieben, wobei Elemente mit derselben oder ähnlichen Funktion mit denselben Bezugszeichen versehen sind. Verfahrensschritte, die in Blockdiagrammen abgebildet sind, können auch in einer anderen als der abgebildeten Reihenfolge ausführbar sein. Alles was innerhalb dieses Dokuments mit Bezug auf eine Vorrichtung gesagt ist, gilt gleichsam auch für das hierin beschriebene Verfahren und anders herum. Außerdem werden nachfolgend Vibrationssignale exemplarisch am Beispiel von Körperschallsignalen beschrieben. Es können aber auch andere Arten von Vibrationssignalen mit der erfindungsgemäßen Vorrichtung beziehungsweise in dem erfindungsgemäßen Verfahren genutzt werden.

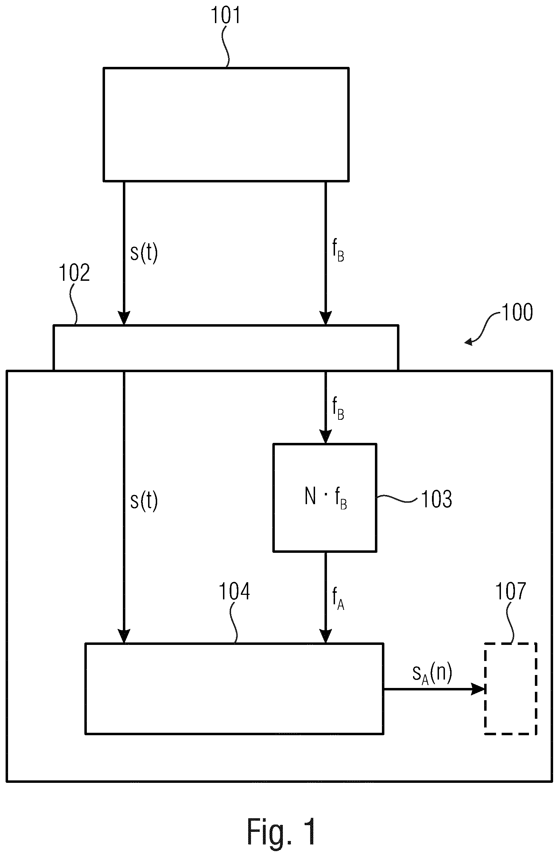

Figur 1 zeigt ein schematisches Blockschaltbild einer beispielhaften Vorrichtung 100 zum Überwachen eines rotierenden Elements 101. Die Vorrichtung 100 weist einen Signaleingang 102 auf. Der Signaleingang 102 ist ausgebildet, um ein von dem rotierenden Element 101 ausgehendes zeitabhängiges Vibrationssignal s(t) zu empfangen. Der Signaleingang 102 ist außerdem ausgebildet, um ein Drehzahlsignal $f_B$ des rotierenden Elements 101 zu empfangen.

Die Vorrichtung 100 weist ferner eine Signalmodifizierungsvorrichtung 103 auf. Die Signalmodifizierungsvorrichtung 103 ist ausgebildet, um das Drehzahlsignal $f_B$ zu modifizieren und ein modifiziertes Drehzahlsignal $f_A$ auszugeben. Hier ist das modifizierte Drehzahlsignal $f_A$ ein mit einem reellwertigen Faktor *N* multipliziertes Vielfaches des Drehzahlsignals $f_B$. Das heißt, die Signalmodifizierungsvorrichtung 103 ist ausgebildet, um das von dem rotierenden Element erzeugte Drehzahlsignal $f_B$ mit einem reellwertigen Faktor *N* zu multiplizieren. Der Faktor *N* kann ganze Zahlen {1, 2, 3, ...} aufweisen, sodass das modifizierte Drehzahlsignal $f_A$ ein echtes Vielfaches des Drehzahlsignals $f_B$ ist. Alternativ oder zusätzlich kann der Faktor N auch rationale Zahlen {..., 1/8, 1/4, 1/2, ...3/8, 4/9, 5/3,... } aufweisen, sodass das modifizierte Drehzahlsignal $f_A$ ein Bruchteil des Drehzahlsignals $f_B$ ist.

Die Vorrichtung 100 weist außerdem eine Abtastvorrichtung 104 auf. Die Abtastvorrichtung 104 ist ausgebildet, um das zeitabhängige Vibrationssignal s(t) unter Verwendung des modifizierten Drehzahlsignals $f_A$ als Abtastrate abzutasten und ein zeitdiskretes Vibrationssignal $s_A(n)$ zu erzeugen. In anderen Worten verwendet die Abtastvorrichtung 104 das von der Signalmodifizierungsvorrichtung 103 modifizierte Drehzahlsignal $f_A$ als Takt beziehungsweise Abtastrate zum Abtasten des von dem rotierenden Element 101 ausgehenden zeitabhängigen Vibrationssignals s(t).

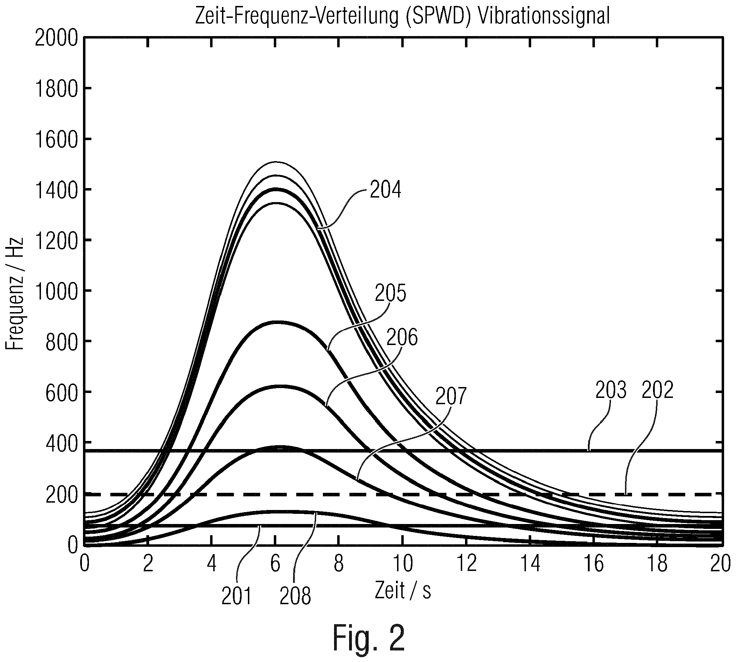

Die Vorrichtung 100 tastet das zeitabhängige Vibrationssignal s(t) somit drehzahlabhängig bzw. drehzahlsynchron ab. Somit unterscheidet sich die Vorrichtung 100 von anderen, aus dem Stand der Technik bekannten, Vorrichtungen, bei denen das zeitabhängige Vibrationssignal s(t) äquidistant abgetastet wird. Ein Vorteil der Vorrichtung 100 liegt darin, dass aufgrund der drehzahlabhängigen Abtastung das resultierende zeitdiskrete Vibrationssignal $s_A(n)$ drehzahlsynchron ist. Das zeitdiskrete Vibrationssignal $s_A(n)$ wird sozusagen von der Variabilität der Drehzahl des rotierenden Elements entkoppelt. Das zeitdiskrete Vibrationssignal $s_A(n)$ erscheint somit trotz sich ändernder Drehzahl des rotierenden Elements als stationär. Ein solches stationäres zeitdiskretes Vibrationssignal $s_A(n)$ weist einen deutlich verbesserten SNR im Vergleich zu konventionellen Methoden mit äquidistanter Abtastung auf. Somit kann das stationäre zeitdiskrete Vibrationssignal $s_A(n)$ wesentlich genauer untersucht werden als bei herkömmlichen Methoden. Dies erlaubt eine theoretische Verbesserung des SNR um einen Faktor, der etwa der Anzahl der Abtastperioden im betrachteten Signal entspricht, im Beispiel nach Fig. 2 etwa 50 dB. Somit wird es möglich, Fehlerquellen mit sehr geringer Amplitude zuverlässig zu detektieren. Gegenüber herkömmlichen Methoden wird es also möglich Fehlerquellen zu detektieren, die einen um bis zu $50 \times 10^3$ geringeren Pegel aufweisen als die regulären Vibrationssignale.

Die Vorrichtung 100 kann optional eine Auswertevorrichtung 107 aufweisen, die ausgebildet ist, um eine Ordnungsanalyse des zeitdiskreten Vibrationssignals $s_A(n)$ auszuführen und dabei mindestens eine Ordnung des zeitdiskreten Vibrationssignals $s_A(n)$ zu bestimmen, um hierüber eine Aussage über den Zustand des rotierenden Elements 101 zu ermitteln. Da die Auswertevorrichtung 107 optional ist, ist sie in Figur 1 in Strichlinien dargestellt.

Um die Unterschiede zum Stand der Technik eindeutig herauszuheben, wird zunächst eine konventionelle Überwachung eines rotierenden Elements am Beispiel der deutschen Patentanmeldung mit der Anmeldenummer 10 2017 200 761.3 beschrieben.

In der konventionellen Spektralanalyse ist die Abtastrate konstant:

$$f_A = \frac{1}{T_A} = konst.$$

Das Spektrum wird in Bezug auf eine Frequenzachse dargestellt, die in äquidistante diskrete Frequenzen mit einem Abstand von

$$\Delta f = \frac{f_A}{N}$$

aufgeteilt ist (im Falle einer orthogonalen Projektion), wobei N die Anzahl der diskreten Stützstellen für die DFT (Diskrete Fouriertransformation) ist. Für die Schwingungsanalyse wird das dynamische Spektrum berechnet, es wird also der zeitliche Verlauf der spektralen Zusammensetzung ermittelt. Somit erhält man eine TFD (Time-Frequency-Distribution, Zeit-Frequenz-Verteilung), welche sämtliche Komponenten — zeitlich konstante und zeitlich variable — enthält.

Figur 2 zeigt eine solche TFD an einem simulierten Beispielsignal einer simulierten drehenden Maschine. Das Diagramm zeigt eine Messung eines Vibrationssignals, das bei sich verändernder Drehzahl der sich drehenden Maschine aufgezeichnet wurde. Auf der Abszisse ist die Zeit in Sekunden aufgetragen. Auf der Ordinate ist die Frequenz in Hz aufgetragen. Bei diesem Beispielsignal wurde die Drehzahl der drehenden Maschine bis zum Scheitelpunkt bei t=6 Sekunden kontinuierlich erhöht und anschließend wieder heruntergefahren. Dabei wies die sich drehende Maschine zum Zeitpunkt t=6 Sekunden eine Drehzahl von 150 Umdrehungen pro Minute auf. Wie in Figur 2 zu erkennen ist, überlagern sich drehzahlunabhängige (konstante) Frequenzen 201, 202, 203 mit drehzahlabhängigen (zeitvariablen) Verläufen 204, 205, 206, 207, 208.

Für die Detektion von Defekten in rotierenden Teilen sind die zeitveränderlichen spektralen Anteile 204, 205, 206, 207, 208 von Interesse, die sich aus der zeitlich variablen Drehzahl ergeben. Mit diversen Methoden der Signalverarbeitung wird beispielsweise versucht, die variable Drehfrequenz in eine konstante Ordnung zur Analyse mittels eines Ordnungsspektrums zu überführen. Methodenunabhängig führen solche Transformationen bzw. Umrechnungen aber zwangsläufig zur Verschlechterung des SNR (Signal-Rausch-Verhältnis) und damit zur Reduktion der ohnehin niedrigen Detektionssicherheit von Defekten.

Für eine konventionelle Ordnungsdetektion (Hüllkurvendemodulation) nach dem Stand der Technik ist ein Mindest-SNR von +10 dB notwendig. Bei schwächeren Signalen bzw. bei einer stärkeren Störung ist eine Ordnung mit konventionellen Methoden nicht nachweisbar. In dem in Figur 2 abgebildeten Signalgemisch liegt der SNR allerdings lediglich bei +9 dB, also knapp unterhalb der theoretischen Nachweisgrenze. Diese Vibrationen wären daher mit der konventionellen Hüllkurven-Demodulation nicht nachweisbar. Eine praktikable Alternative bietet der in der deutschen Patentanmeldung 10 2017 200 761.3 beschriebene Korrelationsdetektor, mit dem die meisten Ordnungen detektierbar sind. Allerdings eignet sich auch hierbei ein Mindest-SNR von +10 dB für eine saubere Signalanalyse.

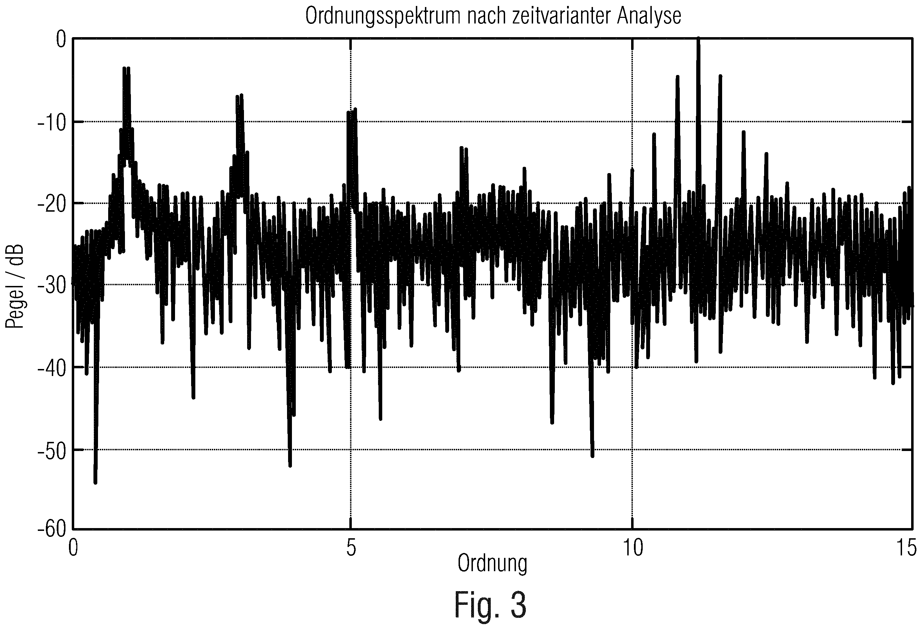

Lediglich beispielhaft zeigt Figur 3 ein mittels des in der deutschen Patentanmeldung 10 2017 200 761.3 beschriebenen Korrelationsdetektors erzeugbares Ordnungsspektrum, bei dem die bekannte aktuelle Drehzahl mittels mathematischer Methoden nach der Abtastung des Vibrationssignals berücksichtigt wurde. Das heißt, ist die aktuelle Drehzahl bekannt, so kann das Ordnungsspektrum mittels des Korrelationsdetektors (matched detector) berechnet werden. Dieser ist theoretisch der empfindlichste Detektor, allerdings nur unter strengen Voraussetzungen (z.B. vorteilhaft: Mindest-SNR > 10 dB), die in diesem Beispiel nicht erfüllt werden. Somit führt dies, wie in Figur 3 zu erkennen ist, insbesondere bei steigender Ordnungszahl zu einem immer größer werdenden Rauschen, in welchem die zu detektierenden Störsignale untergehen.

In der hier vorliegenden Erfindung wählt man einen anderen Weg. Anstatt der nachträglichen mathematischen Berücksichtigung der aktuellen Drehzahl im bereits abgetasteten Signal, wie in der deutschen Patentanmeldung 10 2017 200 761.3 vorgeschlagen, wird das Vibrationssignal s(t) in der hier vorliegenden Erfindung direkt von Beginn an drehzahlabhängig abgetastet. Hierfür wird die aktuelle Drehzahl $f_B$ des drehenden Elements 101 mit einem reellwertigen Faktor *N* multipliziert. Die somit erhaltene modifizierte Frequenz $f_A$ wird dann als Abtastrate zum Abtasten des Vibrationssignals s(t) verwendet.

Unter der Annahme, dass also die aktuelle Drehfrequenz bekannt ist (Normalfall in der Vibrationsanalyse), wird das Vibrationssignal (z.B. ein Körperschallsignal) s(t) nach der erfindungsgemäßen Methode mit einer drehzahlabhängigen Rate $f_A(t)$ abgetastet:

$$f_A(t) = N \cdot f_B(t)$$

Dabei ist $f_B(t)$ die aktuelle Drehfrequenz (Basisfrequenz der Maschine, z.B. der Hauptwelle) und *N* ist ein reellwertiger Faktor. Der Wert des Faktors *N* richtet sich nach der maximal zu untersuchenden Ordnung (in der Regel < 100) sowie nach den höchsten zu erwartenden akustischen Spektralanteilen. Da der Faktor *N* die Bandbreite des abzutastenden Signals s(t) und damit direkt auch den SNR bestimmt, sollte er grundsätzlich auf ein notwendiges Minimum begrenzt werden. Aus diesem Grund sollte N, nach einigen Ausführungsbeispielen, kleiner als 100, oder bevorzugt kleiner als 20 sein.

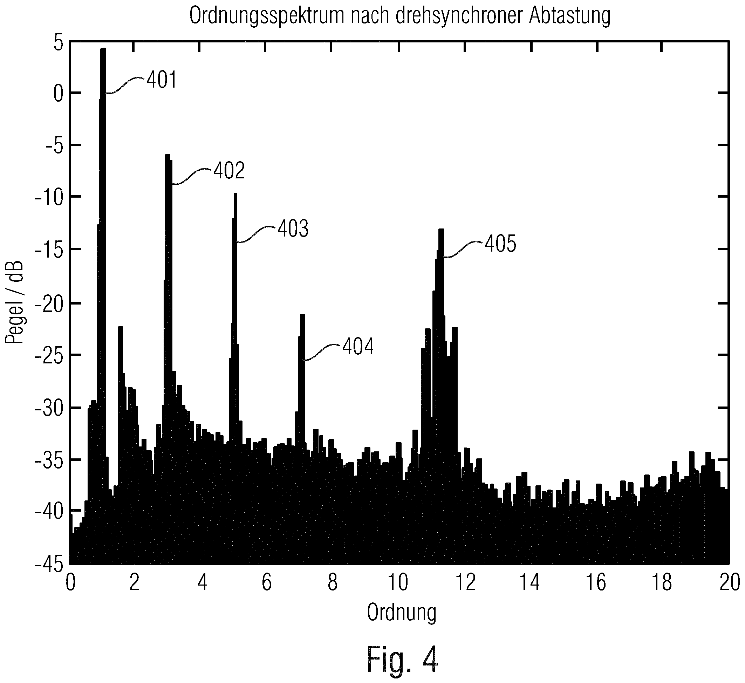

Figur 4 zeigt ein Ordnungsspektrum, wie es mit der erfindungsgemäßen Methode erzeugt werden kann. Auf der Abszisse sind die Ordnungen, hier beispielhaft von 0 bis 20, aufgetragen. Auf der Ordinate sind die Signalpegel in dB aufgetragen.

In dem in Figur 4 abgebildeten Ordnungsspektrum sind beispielhaft fünf detektierbare Ordnungen 401, 402, 403, 404, 405 zu erkennen. Ein erstes Ordnungssignal 401 ist detektierbar bei einer ersten Ordnung R =1 (208), ein zweites Ordnungssignal 402 ist detektierbar bei einer zweiten Ordnung R =3 (207), ein drittes Ordnungssignal 403 ist detektierbar bei einer dritten Ordnung R = 5 (206), ein viertes Ordnungssignal 404 ist detektierbar bei einer vierten Ordnung R =7 (205) und ein fünftes Ordnungssignal 405 ist detektierbar bei einer fünften Ordnung R =11,2 (204).

Dabei sind alle vorliegenden Ordnungen 401, 402, 403, 404, 405 mit hoher statistischer Sicherheit einwandfrei nachweisbar (SNR = 15 dB bis 40 dB). Die Verbesserung des SNR über das Ordnungsspektrum ist jedoch nicht konstant: Sie ist am höchsten bei niedrigen Ordnungen und nimmt mit zunehmender Ordnung ab. Wie in Figur 4 zu erkennen ist, beträgt der SNR beim ersten Signal 401 mit Ordnung R = 1 ca. 30 dB und fällt ab bis zu ca. 10 dB beim fünften Signal 405 mit Ordnung R = 11,2.

Mit der erfindungsgemäßen Vorrichtung und dem erfindungsgemäßen Verfahren zur rotationssynchronen Abtastung lassen sich sämtliche vorhandenen Ordnungen statistisch sehr sicher nachweisen, da der SNR bei allen mindestens 15 dB beträgt, bei den stärksten Ordnungssignalen sogar bis zu 40 dB. Allein im Vergleich zu dem aus der deutschen Patentanmeldung 10 2017 200 761.3 bekannten Korrelationsdetektor (Fig. 3) bedeutet dies eine Verbesserung im Mittel um ca. 20 dB. Eine weitere Verbesserung kann der nachfolgend näher beschriebene zeitvariable Antialiasing-Tiefpass bringen, der bei den bisher beschriebenen Beispielen noch nicht verwendet wurde.

Aus dem Vergleich der konventionellen Vibrationsanalyse (Hüllkurvendetektion) mittels des Korrelationsdetektors (Fig. 3) mit dem erfindungsgemäßen rotationssynchronen Detektor (Fig. 4) folgt, dass das erfindungsgemäße Verfahren mit großem Abstand die höchste Detektionssicherheit bietet. Anders formuliert, die erfindungsgemäße rotationssynchrone Vorrichtung benötigt zur zuverlässigen Ordnungsdetektion wesentlich weniger Messzeit, was bei einigen — vor allem kurzzeitigen — Drehvorgängen (Anlauf, Abbremsen, kurze Laufzeiten wie z.B. bei Harddisk im Computer) von entscheidendem Vorteil sein kann.

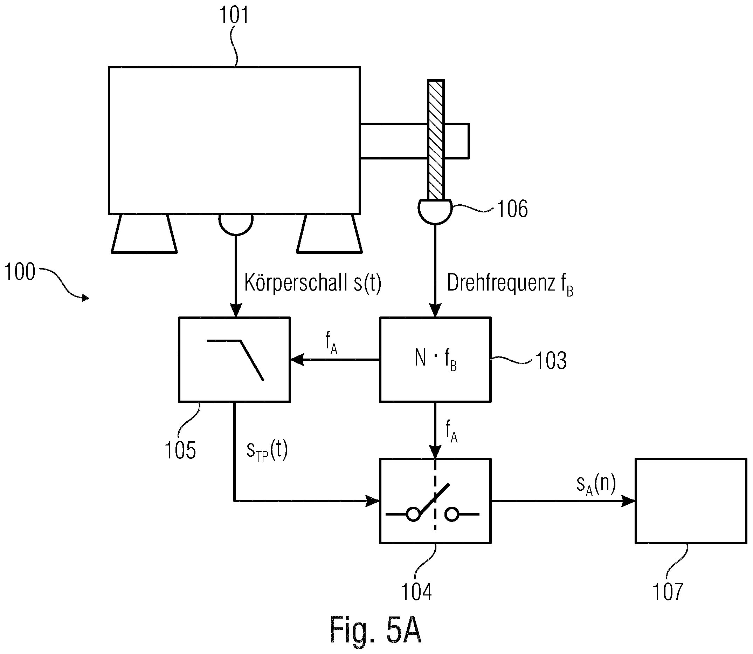

Figur 5A zeigt ein weiteres Beispiel einer Vorrichtung 100, wobei zusätzlich ein als Antialiasing-Tiefpass nutzbares Tiefpassfilter 105 zum Einsatz kommt.

Das Tiefpassfilter 105 ist in Signalrichtung zwischen dem rotierenden Element 101 und der Abtastvorrichtung 104 angeordnet. Das Tiefpassfilter 105 ist ausgebildet, um das zeitabhängige Vibrationssignal s(t) des rotierenden Elements 101 zu filtern und daraus ein tiefpassgefiltertes Vibrationssignal $s_{TP}(t)$ zu erzeugen. Dieses tiefpassgefilterte Vibrationssignal $s_{TP}(t)$ wird dann an die Abtastvorrichtung 104 weitergeleitet und von dieser mit der modifizierten Drehzahl $f_A$ als Abtastfrequenz abgetastet. In diesem Beispiel handelt es sich bei dem Vibrationssignal s(t) um ein Körperschallsignal. Es wären aber auch andere Arten von Vibrationssignalen s(t) denkbar.

Wie in Figur 5A zu erkennen ist, kann beispielsweise ein Rotationssensor 106 an der rotierenden Maschine 101 deren Drehfrequenz $f_B$ aufnehmen. Die Drehfrequenz $f_B$ wird in der Signalmodifizierungsvorrichtung 103 zur Takterzeugung um den Faktor N multipliziert und mit der so modifizierten Grundfrequenz $f_A$ der Abtastrate an die Abtastvorrichtung 104 weitergegeben. Zusätzlich wird die modifizierte Grundfrequenz $f_A$ der Abtastrate an das Tiefpassfilter 105 weitergegeben. Die Filtercharakteristik des Tiefpassfilters kann somit ebenfalls drehzahlabhängig variiert werden. Der Körperschall s(t) kann nun mittels des frequenzvariablen Tiefpasses 105 spektral nach oben begrenzt werden. Der gefilterte Körperschall $s_{TP}(t)$ kann dann mittels der Abtastvorrichtung 104 mit der modifizierten Abtastrate $f_A$ zur Sequenz $s_A(n)$ diskretisiert werden.

Für einen guten SNR, der notwendig ist, um auch Signale von sehr schwachen Defekten zu detektieren, kann also der Körperschall s(t) mittels des vorgeschlagenen Tiefpassfilters 105 in seiner Bandbreite nach oben begrenzt werden. Diese Maßnahme kommt vor allem den sehr tieffrequenten Signalen zugute, bei denen zwar die statistikbasierte SNR-Verbesserung relativ schlecht ist (Varianzreduktion abhängig von der Anzahl der Samples; niedrige Abtastrate, daher wenig Rauschreduktion), aber wegen ihrer tiefen Frequenzen das Spektrum stark beschränkt werden kann. Für die Grenzfrequenz des zeitvariablen Tiefpasses gilt:

$$f_G(t) = R_{max} \cdot f_A(t)$$

$R_{max}$ repräsentiert den Maximalwert der Ordnung im Ordnungsspektrum, im Normalfall liegt er unterhalb von einem Wert von 100. Dabei gilt: $N > 2R_{max}$.

Wie also in Figur 5A zu erkennen ist, kann beispielsweise mit einem Drehfrequenzsensor 106 die aktuelle Drehfrequenz $f_B$ des sich drehenden Elements, hier eine sich drehende Maschine, 101 gemessen werden. Die Drehfrequenz $f_B$ wird mit dem Faktor $N$ multipliziert und gibt damit die Abtastrate $f_A$ sowie die Bandbreite des zu berechnenden Ordnungsspektrums B = 0 ... Rmax vor.

Im Stand der Technik werden Tiefpässe verwendet, um das Spektrum vor der Digitalisierung auf die höchste zulässige Frequenz $f_N$ (Nyquist-Frequenz, halbe Grundfrequenz der Abtastrate) entsprechend dem Abtasttheorem zu begrenzen. Hierbei ist die Grenzfrequenz der Tiefpässe konstant und muss daher auf die höchste noch zu messende Frequenz im Signal dimensioniert werden. Daraus folgt, dass bei tieferen Drehfrequenzen $f_B < f_N$ das durchgelassene Spektrum sehr breit ist und durch noch durchgelassene Störungen und Rauschen den SNR herabsetzt.

Wird hingegen ein Tiefpass mit einer variablen Grenzfrequenz gemäß dem hierin beschriebenen Konzept konstruiert, wobei sich die Grenzfrequenz an der aktuellen Drehfrequenz orientiert (siehe Dimensionierungsvorschrift oben), so wird immer nur eine minimal notwendige Breite des Spektrums durchgelassen, so dass der SNR den maximal möglichen Wert erreicht. Durch diese Maßnahme können in der praktischen Vibrationsanalyse Verbesserungen des SNR von bis zu 20 dB (Faktor 10 für den Messwert) erreicht werden, die die statistische Zuverlässigkeit der Detektion erheblich erhöhen bzw. die Detektion von signalschwachen Defekten (SNR < 10 dB) überhaupt erst möglich machen. Vorteilhaft hierbei ist auch, dass der erfindungsgemäße variable Tiefpass im analogen Bereich arbeitet — wie auch die bisher üblichen Filter im Stand der Technik — dennoch digital durch die aus der Drehfrequenz gewonnene variable Abtastrate $f_A$ gesteuert wird.

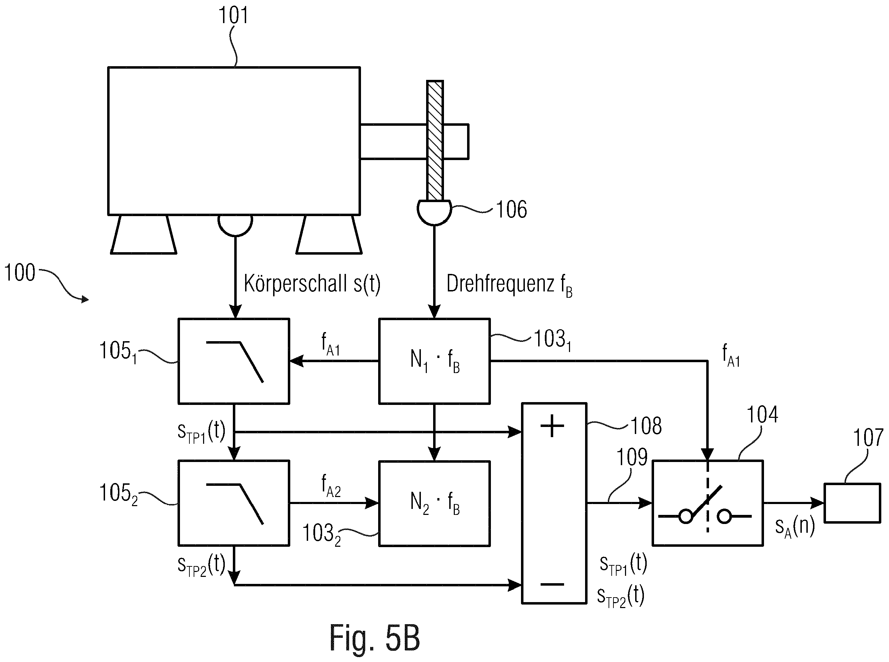

Figur 5B zeigt ein Ausführungsbeispiel der vorliegenden Erfindung, ähnlich zu dem Beispiel aus Figur 5A, weshalb gleiche Elemente mit gleichen Bezugszeichen versehen sind. Allerdings entspricht der reellwertige Faktor $N_1$ dem zuvor beschriebenen reellwertigen Faktor $N$, die erste Signalmodifizierungsvorrichtung $103_1$ entspricht der zuvor beschriebenen Signalmodifizierungsvorrichtung 103, und das erste modifizierte Drehzahlsignal $f_{A1}$(t) entspricht dem zuvor beschriebenen modifizierten Drehzahlsignal $f_A(t)$.

Hier besteht ein weiterer Vorteil darin, dass das aktuelle Spektrum auch nach unten (zu tieferen Frequenzen hin) begrenzt werden kann. Hierfür kann der hierin beschriebene Tiefpass durch zwei in Reihe geschaltete Filter, zum Beispiel ein erstes Tiefpassfilter $105_1$ und ein zweites Tiefpassfilter $105_2$, realisiert werden, die nach entsprechender Dimensionierung und Berechnung insgesamt einen Bandpass ergeben. Auf diese Weise ist eine weitere Verbesserung des SNR möglich.

Es kann hierbei eine erste Signalmodifizierungsvorrichtung $103_1$ vorgesehen sein. In der ersten Signalmodifizierungsvorrichtung $103_1$ kann die von der Drehmaschine 101 abgegriffene Drehfrequenz $f_B$ mit einem ersten Multiplikator $N_1$ multipliziert werden, sodass im Ergebnis eine erste modifizierte Grundfrequenz $f_{A1}$ resultiert, gemäß der Formel:

$$f_{A1}(t) = N_1 \cdot f_B(t)$$

Zusätzlich kann eine zweite Signalmodifizierungsvorrichtung $103_2$ vorgesehen sein. In der zweiten Signalmodifizierungsvorrichtung $103_2$ kann die von der Drehmaschine 101 abgegriffene Drehfrequenz $f_B$ mit einem zweiten Multiplikator $N_2$ multipliziert werden, sodass im Ergebnis eine zweite modifizierte Grundfrequenz $f_{A2}$ resultiert, gemäß der Formel:

$$f_{A2}(t) = N_2 \cdot f_B(t)$$

Die beiden Multiplikatoren $N_1$ und $N_2$ können voneinander unterschiedliche Werte aufweisen.

Wie in Figur 5B zu erkennen ist, kann beispielsweise ein Rotationssensor 106 an der rotierenden Maschine 101 deren Drehfrequenz $f_B$ aufnehmen. Die Drehfrequenz $f_B$ wird in der ersten Signalmodifizierungsvorrichtung $103_1$ zur Takterzeugung mit dem Faktor $N_1$ multipliziert und mit der so modifizierten Grundfrequenz $f_{A1}$ als Abtastrate an die Abtastvorrichtung 104 weitergegeben. Alternativ oder zusätzlich kann die zweite modifizierte Grundfrequenz $f_{A2}$ als Abtastrate an die Abtastvorrichtung 104 weitergegeben werden. Hierzu kann die Drehfrequenz $f_B$ in der zweiten Signalmodifizierungsvorrichtung $103_2$ zur Takterzeugung mit dem Faktor $N_2$ multipliziert und mit der so modifizierten Grundfrequenz $f_{A2}$ als Abtastrate an die Abtastvorrichtung 104 weitergegeben werden (in Figur 5B nicht explizit dargestellt). Außerdem können die erste modifizierte Grundfrequenz $f_{A1}$ an das erste Tiefpassfilter $105_1$ und die zweite modifizierte Grundfrequenz $f_{A2}$ an das zweite Tiefpassfilter $105_2$ weitergegeben werden. Basierend darauf erzeugt das erste Tiefpassfilter $105_1$ ein erstes zeitabhängiges bandbegrenztes Signal $s_{TP1}(t)$ und das zweite Tiefpassfilter $105_2$ erzeugt ein zweites zeitabhängiges bandbegrenztes Signal $s_{TP2}(t)$.

Die Filtercharakteristik, u.a. die Grenzfrequenz, des jeweiligen Tiefpassfilters $105_1$, $105_2$ kann dabei drehzahlabhängig variiert werden. Außerdem können die jeweiligen Tiefpassfilter $105_1$, $105_2$ unterschiedliche Grenzfrequenzen aufweisen. Die jeweilige Grenzfrequenz kann dabei abhängig vom Wert des jeweiligen Multiplikators $N_1$ bzw. $N_2$ sein, mit dem die Drehfrequenz $f_B$ multipliziert wird, um die jeweilige modifizierte Grundfrequenz $f_{A1}$ bzw. $f_{A2}$ zu erhalten. In anderen Worten bestimmt sich die Grenzfrequenz des jeweiligen Tiefpassfilters $105_1$, $105_2$ in Abhängigkeit der jeweiligen modifizierten Grundfrequenz $f_{A1}$ bzw. $f_{A2}$.

Beispielsweise kann das erste Tiefpassfilter $105_1$ eine höhere Grenzfrequenz (z.B. 1 kHz) aufweisen als das zweite Tiefpassfilter $105_2$ (z.B. 500 Hz). Werden nun, wie in Figur 5B beispielhaft dargestellt, die beiden zeitabhängigen bandbegrenzten Signale $s_{TP1}(t)$ und $s_{TP2}(t)$ einem Kombinierer 108 zugeführt, so kann beispielsweise das zweite, mit der kleineren Grenzfrequenz bandbegrenzte, Signal $s_{TP2}(t)$ von dem ersten bandbegrenzten Signal $s_{TP1}(t)$ subtrahiert werden. Daraus ergibt sich ein kombiniertes Signal 109, das in die Abtastvorrichtung 104 geleitet und dort mit zumindest einer der modifizierten Grundfrequenzen $f_{A1}$ bzw. $f_{A2}$ abgetastet wird. Auf diese Weise kann ein Bandpassfilter-Verhalten mittels der beiden beschriebenen Tiefpassfilter $105_1$, $105_2$ nachgebildet werden.

Der Körperschall s(t) kann in diesem Ausführungsbeispiel also mittels der beiden frequenzvariablen Tiefpassfilter $105_1$, $105_2$ spektral nach unten und nach oben begrenzt werden, und zwar in Abhängigkeit der aktuellen Drehzahl der Drehmaschine 101. Das kombinierte Körperschallsignal 109 ($s_{TP2}(t)$ - $s_{TP1}(t)$) kann dann mittels der Abtastvorrichtung 104 mit einer der beiden modifizierten Abtastraten $f_{A1}$ bzw. $f_{A2}$ zur Sequenz $s_A(n)$ diskretisiert werden.

In anderen Worten kann das von der Drehmaschine 101 ausgehende Signal s(t) (z.B. Körperschallsignal) zunächst durch den ersten Tiefpass $105_1$ gefiltert werden, dessen Grenzfrequenz sich aus $f_{A1}$ ergibt. Das gefilterte Signal $s_{TP1}$ kann in den zweiten Tiefpass $105_2$ geleitet und dort mit $f_{A2}$ gefiltert werden, wobei sich die Grenzfrequenz des zweiten Tiefpasses $105_2$ aus $f_{A2}$ ergibt und vorzugsweise unterhalb von $f_{A1}$ liegt und $s_{TP2}$ liefert. Im Signalkombinierer 109 (z.B. Addierblock oder Subtrahierblock) kann eine Differenz der beiden Signale $s_{TP1}$ und $s_{TP2}$ gebildet werden, wodurch sich insgesamt ein Bandpassverhalten ergibt, wobei die Grenzfrequenzen des Bandpasses den jeweiligen Grenzfrequenzen der beiden Tiefpässe $105_1$, $105_2$ entspricht: die obere Grenzfrequenz entspricht der Grenzfrequenz des ersten Tiefpasses $105_1$, die untere Grenzfrequenz entspricht der Grenzfrequenz des zweiten Tiefpasses $105_2$. Das Differenzsignal 109 ($s_{TP2}$ - $s_{TP1}$) wird wie ursprünglich mit $f_{A1}$ abgetastet, so dass am Ausgang das zeitdiskrete bandpassgefilterte Signal $s_A(n)$ vorliegt.

Für die Grenzfrequenz $f_{G1}(t)$ des ersten Tief-

passes $105_1$ gilt:

$$f_{G1}(t) = R_{max} \cdot f_{A1}(t)$$

Für die Grenzfrequenz $f_{G2}(t)$ des zweiten Tiefpasses $105_2$ gilt:

$$f_{G2}(t) = R_{max} \cdot f_{A2}(t)$$

Auch in diesem Fall repräsentiert $R_{max}$ den Maximalwert der Ordnung im Ordnungsspektrum. Im Normalfall liegt er unterhalb von einem Wert von 100. Dabei gilt: $N > 2\ R_{max}$, mit $N = N_1$ bzw. $N = N_2$.

Das Ordnungsspektrum kann dann nach dieser drehzahlabhängigen Abtastung anhand der zeitlich diskretisierten Folge $s_A(n)$ mittels der konventionellen DFT berechnet werden. Zu beachten ist dabei, dass die unterschiedlich lange Abtastperiode bei der drehzahlabhängigen Abtastung für die Berechnung der DFT keine Rolle spielt, da die Datensequenz als solche transformiert wird. Dieser Effekt kann als implizite Skalierung der variablen Abtastrate in eine konstante Abtastrate interpretiert werden.

Die DFT transformiert daher Folgen von zeitlich nicht äquidistant erfassten Messwerten zum Ordnungsspektrum, unabhängig davon, mit welchen Abtastraten sie gewonnen wurden. Dabei muss allerdings beachtet werden, dass unabhängig von der konkreten absoluten Abtastrate bzw. bei einer konstanten Ordnung das Abtasttheorem nicht verletzt wird.

Hierfür kann das erfindungsgemäße Tiefpassfilter 105 als ein drehzahlabhängiger Antialiasing-Tiefpass eingesetzt werden, dessen Grenzfrequenz im Wesentlichen der oben genannten Bedingung zur Einhaltung des Abtasttheorems genügen muss.

Die erfindungsgemäße Vorrichtung und das erfindungsgemäße Verfahren garantieren einen wesentlichen Beitrag zur SNR-Verbesserung (und zur Detektionssicherheit), wie sie bisher nicht machbar waren. So wird beispielsweise in dem zuvor mit Bezug auf Figur 2 diskutierten simulierten Signal (nach Käferstein) in Bezug auf den Drehzahlverlauf eine theoretische SNR-Verbesserung von etwa 50 dB erreicht. Die praktisch erreichte Verbesserung liegt bereits ohne das zuvor beschriebene Tiefpassfilter 105 bei etwa 30 dB (siehe Figur 4).

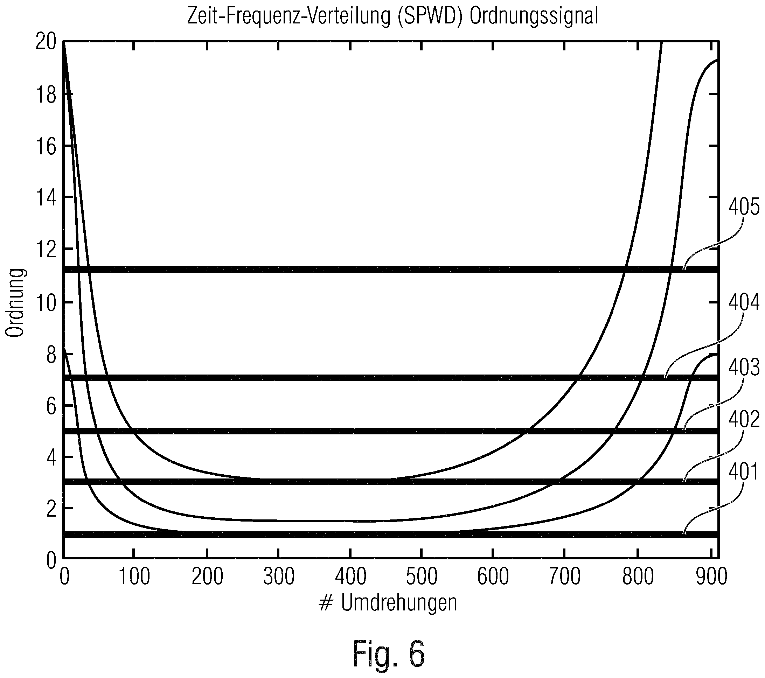

Erfindungsgemäß kann die Abtastrate $f_A$ drehzahlabhängig variiert werden. Figur 6 zeigt ein Ordergramm wie es mittels der vorliegenden Erfindung erzeugbar ist. Dabei handelt es sich um dasselbe Vibrationssignal s(t) wie in Figur 2. Allerdings wurde das Vibrationssignal s(t) in Figur 2 zu äquidistanten Zeitpunkten mit einer Grundfrequenz $f_s$ abgetastet, während hingegen in Figur 6 erfindungsgemäß drehzahlabhängig mit der modifizierten Abtastfrequenz $f_A$ abgetastet wurde.

Figur 6 zeigt also ein Ordergramm des Vibrationssignals s(t) aus Figur 2 in Bezug auf die absolute Anzahl der Umdrehungen des rotierenden Elements. Die nach Figur 6 detektierten Ordnungssignale können hier in ihrem zeitlichen bzw. rotationsbezogenen Zusammenhang verfolgt werden.

Für die Maschinendiagnostik sowie für die Zustandsüberwachung sind in dem in Figur 6 abgebildeten Ordergramm insbesondere die über die variable Drehzahl hinweg konstanten Ordnungen 401 bis 405 von Interesse. In Figur 6 sind beispielhaft die bereits zuvor mit Bezug auf Figur 4 beschriebenen Ordnungssignale 401 bei einer ersten Ordnung R = 1, 402 bei einer zweiten Ordnung R = 3, 403 bei einer dritten Ordnung R = 5, 404 bei einer vierten Ordnung R = 7 und 405 bei einer fünften Ordnung R = 11,2 abgebildet.

Für die Maschinendiagnostik sowie für die Zustandsüberwachung ist die Dynamik (zeitliche Veränderungen der Ordnungssignale, vor allem die von Defekten kommenden) von zentraler Bedeutung, um Ausfälle zu vermeiden und Wartung bzw. Reparatur zu planen. Auch dafür eignen sich gut auflösende Methoden der TFA (Time-Frequency-Analysis, Zeit-Frequenz-Analyse) wie hier in Figur 6 mittels der SPWD dargestellt. Diese Methoden der TFA liefern um Größenordnungen bessere Ergebnisse als das zwar weit verbreitete, aber zu grobe Spektrogramm.

In Fig. 6 ist die Zeit-Frequenz-Verteilung des Ordnungssignals der in Figur 1 simulierten Maschine 101 dargestellt. Man kann eindeutig (nach der Detektion in Figur 4) die einzelnen Ordnungskomponenten 401, 402, 403, 404, 405 in ihrem Zeitverlauf verfolgen und den jeweiligen Maschinenteilen sowie möglichen Defekten zuordnen.

Somit ermöglicht die Erfindung eine sehr genaue Bestimmung selbst von kleinsten Defekten in einer rotierenden Maschine. Aufgrund der erfindungsgemäßen drehzahlabhängigen Abtastung des Vibrationssignals s(t) erscheinen die von Defekten stammenden Ordnungen 401, 402, 403, 404, 405 als stationär, sodass diese Ordnungen einem bestimmten Defektbild zugeordnet werden können.

Die Erfindung geht allerdings noch darüber hinaus. Das erfindungsgemäße Verfahren sowie die erfindungsgemäße Vorrichtung erlauben es sogar die Anzahl der Defekte, beziehungsweise die Anzahl von Defektquellen, genau zu bestimmen.

Hierfür weist die erfindungsgemäße Vorrichtung 100 in einer Ausgestaltung eine Auswertevorrichtung 107 (Figur 5) auf, die ausgebildet ist, um eine bispektrale Ordnungsanalyse des zeitdiskreten Vibrationssignals $s_A(n)$ auszuführen und dabei ein Ordnungsspektrum des zeitdiskreten Vibrationssignals $s_A(n)$ in zwei zeitverschobenen Varianten miteinander zu korrelieren, um mittels der bispektralen Ordnungsanalyse eine Aussage über eine Anzahl von Defektquellen des rotierenden Elements 101 zu ermitteln.

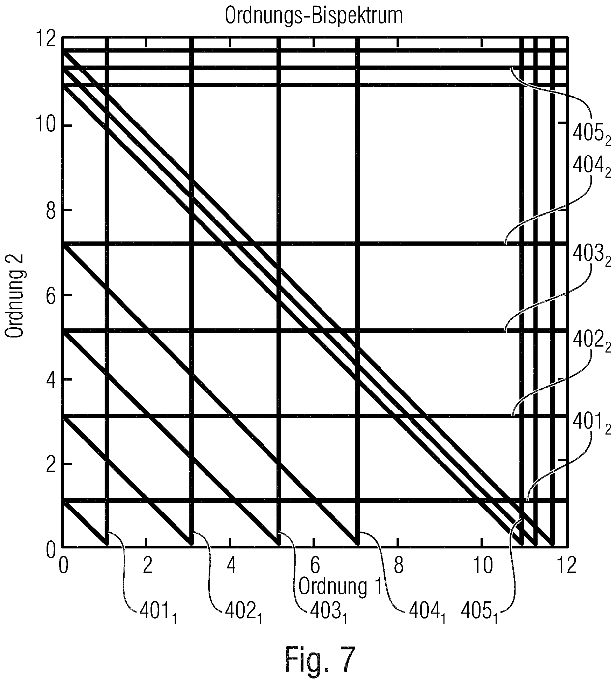

Das erfindungsgemäß erzeugte Ordnungssignal $s_A(n)$ kann also diagnostisch wertvoll dafür genutzt werden, um funktionale Zusammenhänge zwischen einzelnen Ordnungskomponenten zu untersuchen. Dafür eignet sich beispielsweise ein solches Bispektrum, welches für den konkreten bisher beschriebenen Beispielfall in Figur 7 dargestellt ist. Grundsätzlich gilt, dass wenn eine Zweierkombination aus Ordnungen einen statistisch nachweisbaren Zusammenhang aufweist, so sind diese Ordnungen kausal verknüpft, stammen also aus einer Quelle, d.h. einem mechanischen Teil oder einem Defekt. Auf diese Weise wird es möglich, Defekte rein signalanalytisch voneinander zu trennen.

Bei dem in Figur 7 abgebildeten Diagramm handelt es sich beispielhaft um ein Bispektrum des Ordnungssignals $s_A(n)$ aus Figur 5. Mittels eines geeigneten Detektors für Statistiken dritter Ordnung sind quadratische Phasenkopplungen zwischen Komponenten des Ordnungssignals nachweisbar (weiße Flecken im Bispektrum).

Wie in Figur 7 zu sehen ist, ist an der x-Achse und an der y-Achse jeweils ein Ordnungsspektrum aufgetragen. Dabei handelt es sich hier beispielhaft um zwei Ordnungsspektren 1 und 2, in denen die bereits zuvor beispielhaft beschriebenen detektierten Ordnungen 401, 402, 403, 404, 405 wieder zu finden sind.

So ist in Figur 7 auf der x-Achse das erste Ordnungsspektrum "Ordnung 1" aufgetragen. Zu erkennen sind die von der Drehzahlvarianz entkoppelten (hier vertikal verlaufenden) Ordnungssignale $401_1$ bei einer ersten Ordnung R =1, $402_1$ bei einer zweiten Ordnung R = 3, $403_1$ bei einer dritten Ordnung R = 5, $404_1$ bei einer vierten Ordnung R = 7 und $405_1$ bei einer fünften Ordnung R = 11,2. Die hier abgebildeten Ordnungssignale weisen also folgende Ordnungen auf: R = 1; 3; 5; 7; 11,2.

Auf der y-Achse ist das zweite Ordnungsspektrum "Ordnung 2" aufgetragen. Zu erkennen sind die von der Drehzahlvarianz entkoppelten (hier horizontal verlaufenden) Ordnungssignale $401_2$ bei einer ersten Ordnung R =1, $402_2$ bei einer zweiten Ordnung R = 3, $403_2$ bei einer dritten Ordnung R = 5, $404_2$ bei einer vierten Ordnung R = 7 und $405_2$ bei einer fünften Ordnung R = 11,2. Die hier abgebildeten Ordnungssignale weisen ebenfalls folgende Ordnungen auf: R = 1; 3; 5; 7; 11,2.

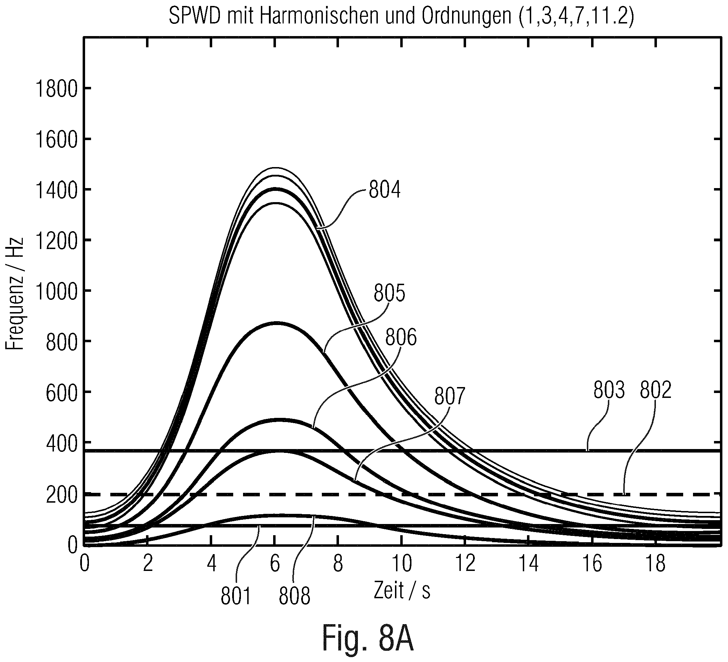

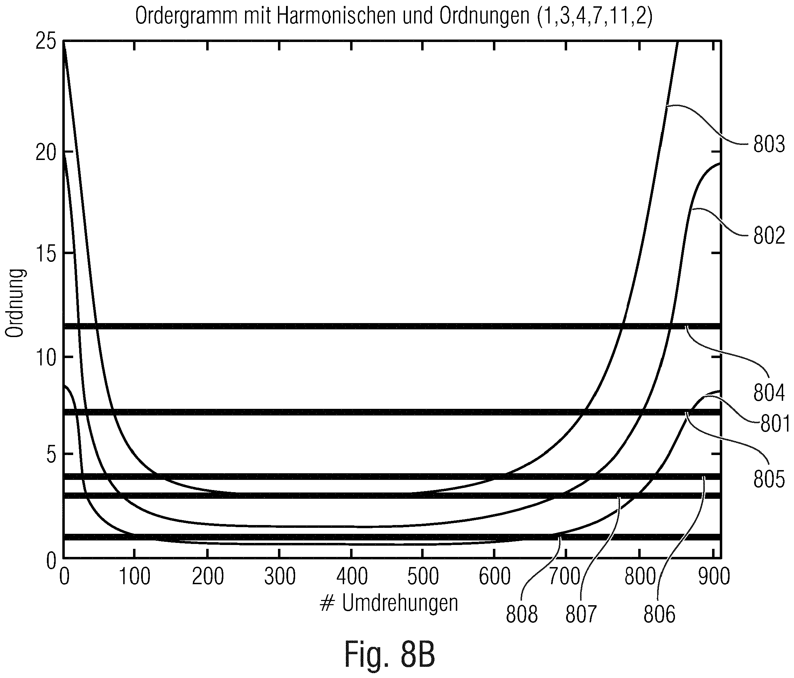

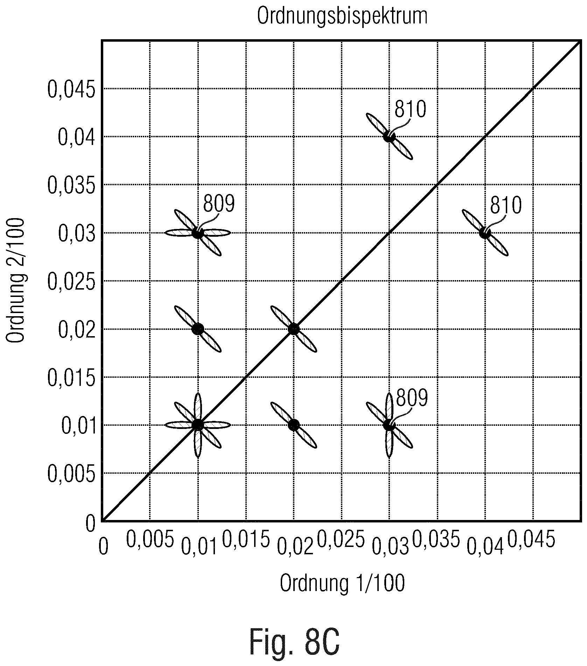

Figur 8C zeigt ein weiteres Beispiel für ein Ordnungs-Bispektrum. Hier sind die kausalen Zusammenhänge, die mittels des Bispektrums detektierbar sind, nochmals etwas deutlicher gezeigt. Zur detaillierten Beschreibung des in Figur 8C abgebildeten Bispektrums soll allerdings zunächst auf die in den Figuren 8A und 8B abgebildeten SPWD-Diagramme verwiesen werden.

Die in Figur 8A abgebildete TFD/SPWD (Time-Frequency Distribution, Smoothed Pseudo Wigner Distribution) zeigt die Zeit-Frequenz-Verteilung eines Vibrationssignals s(t), welches aus konstanten Harmonischen 801, 802, 803 und drehzahlvariablen Anteilen 804, 805, 806, 807, 808 besteht. (Anm.: eine SPWD hat um Größenordnungen bessere Zeit-Frequenz-Auflösung als das konventionell verwendete Spektrogramm).

Das in Figur 8A abgebildete SPWD-Diagramm ist im Wesentlichen vergleichbar mit dem zuvor mit Bezug auf Figur 2 diskutierten SPWD-Diagramm, jedoch mit dem Unterschied, dass sich die jeweils darin abgebildeten Ordnungssignale in deren jeweiligen Ordnungen R von den Signalen aus Figur 2 unterscheiden.

In Figur 8A liegen die Ordnungen der drehzahlabhängigen Komponenten 804, 805, 806, 807, 808 beispielsweise bei R = 1, 3, 4, 7 und 11,2. Die konstanten Harmonischen (drehzahlunabhängig) 801, 802, 803 liegen bei 81 Hz, 195 Hz und 370 Hz und sind moduliert. Dabei stammen die Ordnungssignale mit den Ordnungen R = 1, 3 und 4 von einem Defekt, und die Ordnungssignale mit der Ordnung R = 3, 4 und 7 stammen von einem anderen Defekt.

Das heißt, die Ordnungssignale mit der Ordnung R = 3 und 4 in der TFD in Figur 8A sind beiden Defekten spektral gemeinsam. Mit herkömmlichen Methoden ist es kaum möglich, die Ordnungssignale statistisch sicher zu detektieren, schon gar nicht unterschiedlichen Defekten zuzuordnen, da die Ordnungssignale bei Ordnung R = 3 und 4 bei beiden Defekten dieselbe mittlere Frequenz aufweisen.

Nach der erfindungsgemäßen drehzahlabhängigen Abtastung mit der modifizierten Abtastfrequenz $f_A$ erhält man dann das in Figur 8B abgebildete Ordergramm. Dieses zeigt auch wieder die SPWD (viel besser als ein Spektrogramm, siehe oben) des Vibrationssignals s(t), allerdings nicht mehr auf die Zeit, sondern auf die Drehzahl bzw. auf die Umdrehungszahl (absolute Phase würde sich aus Multiplikation mit 2pi ergeben) bezogen.

Demnach sind auch in Figur 8B wieder die modulierten konstanten Harmonischen (drehzahlunabhängig) 801, 802, 803 bei 81 Hz, 195 Hz und 370 Hz zu erkennen. Die Ordnungssignale mit den Ordnungen R = 1, 3, 4, 7 und 11,2 erscheinen hier als drehzahlkonstante Komponenten 804, 805, 806, 807, 808, da das Vibrationssignal s(t) erfindungsgemäß drehzahlabhängig abgetastet wurde.

An dieser Stelle soll nochmals explizit darauf hingewiesen werden, dass das Ordergramm nicht aus einer zeitlich äquidistanten Abtastung durch Umrechnung erhalten wird, sondern erfindungsgemäß direkt aus der drehzahlabhängigen Abtastung mit der modifizierten Abtastfrequenz $f_A$, also ohne Verluste im SNR bzw. mit deutlichen Gewinnen im SNR.

Transformiert man das in Figur 8B abgebildete Ordergramm mit der einfachen DFT, so erhält man ein Orderspektrum wie es beispielsweise in Figur 4 dargestellt ist. Dies ist völlig ausreichend und im deutlichen Vorteil im Vergleich mit bisherigen Methoden hinsichtlich der Detektionssicherheit eines Vibrationssignals s(t), insbesondere eines Defektsignals. Da man in der Praxis aber wird verfolgen wollen, wie sich die potentiellen Defekte entlang der Betriebszeit entwickeln, eignet sich für die Diagnostik die Darstellung in einem Ordergramm, wie es beispielhaft in Figur 8B dargestellt ist.

Hier ist zu beachten, dass die dynamische Darstellung der Ordnungsverläufe wegen der zeitlichen Ausdehnung auf Kosten der Detektionssicherheit geht. Das aber ist kein prinzipielles Problem, da man die Detektion dem dynamischen Spektrum vorziehen kann.

An dieser Stelle hat man zwar eine sehr zuverlässige Detektion von schwachen Vibrationssignalen, ob sie regulär oder von Defekten kommen. Hier wurde der oft vorkommende Fall simuliert, dass (mindestens) zwei Defekte vorliegen. Anhand der beiden oben beschriebenen Methoden (Grafiken in den Figuren 8A und 8B) hat man teils keine Chancen zu ermitteln, ob ein oder mehrere Defekte vorliegen. Die Ordnungssignale 1, 3, 4 und 7 sind sicher nachweisbar, aber man weiß nicht, ob sie von einem oder von zwei Defekten kommen.

Hierfür kommt das in Figur 8C beispielhaft abgebildete Bispektrum als Analysemethode zum Einsatz. Stark vereinfacht lässt sich eine Spitze (bzw. ein dunkler Fleck in der unteren Grafik) folgendermaßen interpretieren:

Man betrachtet zunächst allein den ersten Oktanten, d.h. die untere Hälfte unter der Nebendiagonale der dargestellten Matrix, mathematisch demnach order2 < order1. Man kann zwei nachweisbare "dunkle Flecken" 809, 810 identifizieren. Diese sind ein klarer Nachweis dafür, dass bei Ordnungen 1, 3 und 4 ein funktionaler Zusammenhang 809 (eine Defektquelle) vorliegt (ord1 = 3, ord2 = 1).

Weiterhin weist der "dunkle Fleck" 810 bei ord1 = 4 und ord2 = 3 auf einen zweiten funktionalen Zusammenhang hin, also auf die zweite Defektquelle.

Fazit der bispektralen Analyse ist, dass zwei Defekte vorliegen, wobei sie gemeinsame Ordnungen 3 und 4 aufweisen.

Eine solche bispektrale Analyse funktioniert auch in der Praxis nur bei echt stationären Signalen. Sie wäre daher auf das Originalsignal gar nicht anwendbar, da dieses extrem dynamisch ist. Durch die erfindungsgemäße Methode der drehzahlabhängigen Abtastung werden die Ordnungssignale für das Bispektrum faktisch stationär, so dass eine zuverlässige Funktionsdiagnostik über beliebig lange Zeitabschnitte möglich wird.

Ob es sich um einen Zugriffsvorgang auf die Festplatte handelt, der wenige Sekunden dauert, oder eine stundenlange Fahrt eines ICE. (Anm.: In Figur 8C wurden gezielt auch andere "dunkle Flecken" dargestellt, damit deutlich wird, dass das Bispektrum auch seine Detektionsgrenzen hat. Dazu gibt es eine umfangreiche Detektionstheorie, die aber hier nicht im Vordergrund steht.)

In der Praxis wird es nicht überall und auch nicht sofort möglich sein, die Erfindung umzusetzen, da dies den Austausch von Millionen von Sensoren bedeuten würde. Man kann allerdings damit planen, dass die Erfindung in neuen Sensoren umgesetzt wird, die zum Ausführen des erfindungsgemäßen Verfahrens ausgebildet sind.

Um die Erfindung auch mit alter beziehungsweise konventioneller Technologie kompatibel zu machen und damit zum Einsatz zu bringen, beziehungsweise um auch alte gespeicherte Daten neu analysieren zu können, sieht eine weitere denkbare Ausführungsform der Erfindung vor, dass die Vorrichtung ausgebildet ist, um ein mit einer äquidistanten Abtastrate $f_S$ abgetastetes zeitdiskretes Vibrationssignal x(n) mit einer mit einem reellwertigen Oversampling-Faktor OS multiplizierten Grundfrequenz

$$f_a = OS \cdot f_S$$

überabzutasten und ein überabgetastetes Vibrationssignal $x_{OS}(n)$ zu erzeugen, wobei die Abtastvorrichtung ausgebildet ist, um dieses überabgetastete Vibrationssignal xos(n) in derselben Art und Weise wie das zeitabhängige Vibrationssignal s(t) zu behandeln.

In anderen Worten werden Vibrationssignale x(t) mit der bestehenden Technologie mit einer Abtastrate (Grundfrequenz) von $f_S$ abgetastet, um ein zeitdiskretes Signal x(n) zu erzeugen. Analog dazu können gespeicherte Daten betrachtet werden, die bereits früher mit ebendieser Abtastrate (Grundfrequenz) von $f_S$ abgetastet wurden.

Um das erfindungsgemäße Verfahren anwenden zu können, kann das bereits zeitdiskretisierte Signal x(n) so stark überabgetastet werden, dass es als semianalog bzw. quasianalog erscheint. Als Richtwert sollte man auf eine Abtastrate von mindestens 1 Msps kommen (Megasamples-per-second) bzw. auf eine Grundfrequenz der Abtastung von 1 MHz:

$$f_a = OS \cdot f_S$$

dabei ist OS der reellwertige Oversampling-Faktor.

Sei nun $T_d$ die Dauer einer Drehung (z.B. der Hauptwelle) und befinden sich auf der Welle $N_d$ Zähne oder Noppen, so beträgt die physische Dauer einer lokalen Periode

$$T_{da} = \frac{T_d}{N_d}.$$

Aus dem überabgetasteten Originalsignal $x_{OS}(n)$ werden zu Zeitpunkten $n^*T_{da}$ Messwerte entnommen und in eine Signalsequenz $x_{da}(n)$ mit konstantem Abstand angeordnet. Dadurch wird implizit die quasikontinuierliche Skalierung der Zeitachse erreicht, wobei allerdings im Unterschied zu bestehenden Verfahren die tatsächliche Zeit-Frequenz-Auflösung konstant hoch bleiben wird.

Nach einer anschließenden DFT erhält man ein nahezu ideales Bild, siehe Figur 4. Voraussetzung ist, wie oben erwähnt, eine hinreichend hohe Überabtastung des bereits diskretisierten Signals (os > 10... 100) und eine nicht zu hohe Anzahl der Zähne/Noppen der Drehwelle bzw. der künstliche Faktor *N* ($N_d$ 100...1000). Im konkreten Fall können diese Parameter in Abhängigkeit von den vorliegenden technischen und signalanalytischen Gegebenheiten optimiert werden.

Auch bei dieser Ausführungsform des erfindungsgemäßen Verfahrens kann mittels des Tiefpassfilters 105 das Aliasing vermieden werden

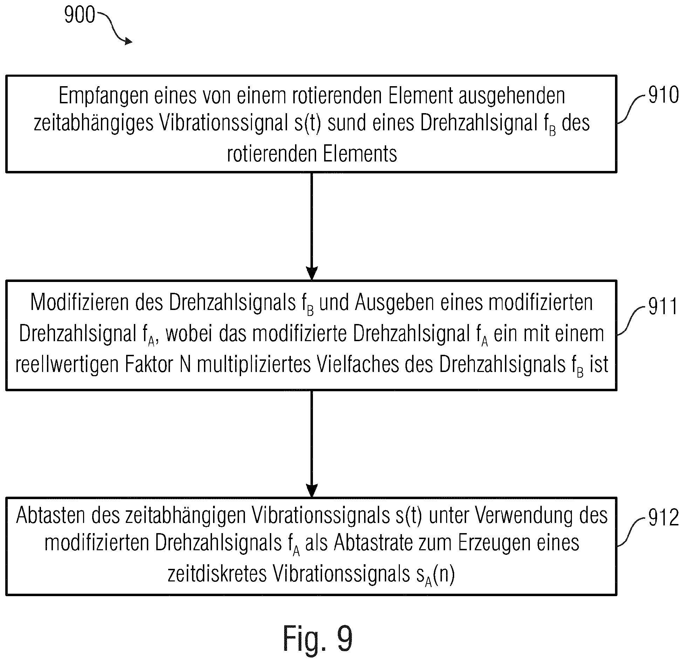

Figur 9 zeigt ein Blockschaltbild eines erfindungsgemäßen Verfahrens 900 zum Überwachen eines rotierenden Elements. In Block 910 werden ein von dem zu überwachenden rotierenden Element ausgehendes zeitabhängiges Vibrationssignal s(t) sowie ein Drehzahlsignal $f_B$ des rotierenden Elements empfangen.

In Block 911 wird das Drehzahlsignal $f_B$ modifiziert und ein entsprechend modifiziertes Drehzahlsignal $f_A$ wird ausgegeben. Erfindungsgemäß wird das Drehzahlsignal $f_B$ insofern modifiziert, dass es mit einem reellwertigen Faktor *N* multipliziert wird, sodass das modifizierte Drehzahlsignal $f_A$ ein mit diesem reellwertigen Faktor *N* multipliziertes Vielfaches des ursprünglichen Drehzahlsignals $f_B$ ist.

In Block 912 wird das zeitabhängige Vibrationssignal s(t) unter Verwendung des modifizierten Drehzahlsignals $f_A$ als Abtastrate abgetastet, um somit ein zeitdiskretes Vibrationssignal $s_A(n)$ zu erzeugen.

Zusammenfassend bieten die erfindungsgemäße Vorrichtung 100 sowie das erfindungsgemäße Verfahren 900 die folgenden Vorteile:
Im Vergleich zu bestehenden Methoden der vibrationsbasierten Diagnostik, die zunächst das gesamte akustische Spektrum mit konventionellen Methoden erfassen und anschließend auswerten bzw. modifizieren, steht hier nicht die akustikbasierte, sondern die rotationsorientierte Diagnostik im Vordergrund. Das bedeutet, dass die bisherigen Methoden der akustischen Diagnostik im Sinne der Erfindung ersetzt werden können, da sie auf Konzepten der Zeit-Frequenz-Analyse mit konstanten Abtastraten basieren. Diese haben nach wie vor ihre Existenzberechtigung. Die hierin beschriebenen erfindungsgemäßen methodischen und technologischen Ansätze bringen einen signifikanten Beitrag zur Detektionssicherheit von Defekten bzw. zur Verlaufsdiagnostik des Maschinenzustandes.

Der wesentliche Beitrag besteht im Folgenden:

- Die konventionelle Zustandsanalyse rotierender Maschinen basiert bisher auf der konventionellen akustischen Diagnostik. Das bedeutet, Schall und Körpersignale werden mit konstanten Abtastraten erfasst und erst danach mit Methoden der Signalanalyse (Spektrogramm, Ordergramm) auf zeitvariable rotationsbezogene Anteile untersucht.
- Wird erfindungsgemäß drehzahlabhängig (rotationssynchron) abgetastet, so ergeben sich folgende wesentliche Vorteile:
    - Die Datenmenge ist nicht größer als unbedingt notwendig, während sie bei konventionellen Verfahren eine Redundanz um den Faktor von $10^3$ bis $10^6$ erreichen kann. In diesem Bereich liegt dann auch die benötigte Rechenleistung, die gerade bei autonomen Sensoren bzw. verteilten Systemen inakzeptable Ausmaße erreichen kann.
    - Man kann in Echtzeit analysieren, daher auch reagieren und steuern. Die zeitliche Verzögerung in Bezug zur Realität beträgt im Normalfall nicht mehr als wenige Sekunden, schlimmstenfalls einige Minuten. Eine solche Verzögerung ist zwar durch die Transformation in den Spektral- und/oder Ordnungsbereich prinzipbedingt bei allen Verfahren notwendig. Allerdings führt dieselbe Verzögerungszeit in der erfindungsgemäßen Methode zu einer wesentlich stärkeren Unterdrückung der Störungen als bei konventionellen Methoden.

Für die Umsetzung der erfindungsgemäßen Vorrichtung und des erfindungsgemäßen Verfahrens kann in einigen Ausführungsbeispielen vorhandene Technologie (analoge und digitale Elektronik, Kommunikationskanäle) eingesetzt werden. Es müssen hierbei keine neuen Schaltkreise oder Sensoren entwickelt werden.

Die eingesparte (redundante) Datenmenge, Kommunikationskapazität und Rechenleistung liegen je nach Anwendung und Spezifik um Dekaden (10^2 ...10^4 ) unter dem bisherigen Bedarf.

Durch die frühzeitige und hohe Detektionssicherheit von Defekten werden destruktive Prozesse in rotierenden Maschinen früher erkannt und verfolgt, was zur besseren Planung und Wartung führt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren mit einer der entsprechenden auch hier beschriebenen Vorrichtungen installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

**1.** Vorrichtung (100) zum Überwachen eines rotierenden Elements (101), wobei die Vorrichtung (100) aufweist:

einen Signaleingang (102), der ausgebildet ist, um ein von dem rotierenden Element (101) ausgehendes zeitabhängiges Vibrationssignal s(t) und ein Drehzahlsignal $f_B$ des rotierenden Elements (101) zu empfangen,

eine Signalmodifizierungsvorrichtung (103), die ausgebildet ist, um das Drehzahlsignal $f_B$ zu modifizieren und ein modifiziertes Drehzahlsignal $f_A$ auszugeben,

eine Abtastvorrichtung (104), die ausgebildet ist, um das zeitabhängige Vibrationssignal s(t) unter Verwendung des modifizierten Drehzahlsignals $f_A$ als Abtastrate abzutasten und ein zeitdiskretes Vibrationssignal $s_A(n)$ zu erzeugen, **dadurch gekennzeichnet, dass** das modifizierte Drehzahlsignal $f_A$ ein mit einem reellwertigen Faktor $N$ multipliziertes Vielfaches des Drehzahlsignals $f_B$ ist,
wobei die Vorrichtung (100) eine zweite Signalmodifizierungsvorrichtung ($103_2$) aufweist, die ausgestaltet ist, um das Drehzahlsignal $f_B$ zu modifizieren und ein zweites modifiziertes Drehzahlsignal $f_{A2}$ auszugeben, wobei das zweite modifizierte Drehzahlsignal $f_{A2}$ein mit einem zweiten reellwertigen Faktor $N_2$ multipliziertes Vielfaches des Drehzahlsignals $f_B$ ist.

**2.** Vorrichtung (100) nach Anspruch 1,
wobei die Vorrichtung (100) ferner eine Auswertevorrichtung (107) aufweist, die ausgebildet ist, um eine Ordnungsanalyse des zeitdiskreten Vibrationssignals $s_A(n)$ auszuführen und dabei mindestens eine Ordnung des zeitdiskreten Vibrationssignals $s_A(n)$ zu bestimmen, um hierüber eine Aussage über den Zustand des rotierenden Elements (101) zu ermitteln.

**3.** Vorrichtung (100) nach Anspruch 1 oder 2,

wobei die Signalmodifizierungsvorrichtung (103) ausgebildet ist, um das Drehzahlsignal $f_B$ unter Anwendung der Formel $f_A = N \cdot f_B$ zu modifizieren, wobei N ein reellwertiger Faktor und $f_A$ das modifizierte Drehzahlsignal ist,
wobei sich der reellwertige Faktor $N$ nach einer maximal zu untersuchenden Ordnung und/oder nach einem höchsten zu erwartenden akustischen Spektralanteil richtet, wobei der reellwertige Faktor $N$ kleiner als 100, oder bevorzugt kleiner als 20 ist.

**4.** Vorrichtung (100) nach einem der vorhergehenden Ansprüche, wobei die Vorrichtung (100) ausgebildet ist, um das zeitdiskrete Vibrationssignal $s_A(n)$ innerhalb eines Zeitraums zu erzeugen, in dem sich die Drehzahl des rotierenden Elements (101) ändert.

**5.** Vorrichtung (100) nach einem der vorhergehenden Ansprüche, wobei die Vorrichtung (100) ferner ein Tiefpassfilter (105) aufweist, wobei das Tiefpassfilter (105) in Signalrichtung zwischen dem rotierenden Element (101) und der Abtastvorrichtung (104) angeordnet ist, wobei das Tiefpassfilter (105) ausgebildet ist, um das zeitabhängige Vibrationssignal s(t) des rotierenden Elements (101) zu filtern und daraus ein tiefpassgefiltertes Vibrationssignal $s_{TP}(t)$ zu erzeugen,
wobei das Tiefpassfilter (105) eine Grenzfrequenz $f_G(t) = R_{max} \cdot f_A(t)$ aufweist, wobei $f_G(t)$ die zeitabhängige Grenzfrequenz des Tiefpassfilters, $f_A(t)$ das modifizierte zeitabhängige Drehzahlsignal des rotierenden Elements und $R_{max}$ ein Maximalwert einer Ordnung in einem Ordnungsspektrum ist, wobei für den Faktor $R_{max}$ die Bedingung $R_{max} < N/2$ mit dem reellwertigen Faktor N gilt.

**6.** Vorrichtung (100) nach einem der vorhergehenden Ansprüche, wobei sich der Wert des zweiten reellwertigen Faktors $N_2$ von dem Wert des reellwertigen Faktors N unterscheidet.

**7.** Vorrichtung nach einem der vorhergehenden Ansprüche, wobei die Abtastvorrichtung (104) ausgestaltet ist, um das modifizierte Drehzahlsignal $f_A$ oder das zweite modifizierte Drehzahlsignal $f_{A2}$ als Abtastrate zu verwenden.

**8.** Vorrichtung (100) nach einem der vorhergehenden Ansprüche, wobei die Vorrichtung (100) ein erstes Tiefpassfilter ($105_1$) und ein zweites Tiefpassfilter ($105_2$) aufweist, wobei das erste und das zweite Tiefpassfilter ($105_1$, $105_2$) jeweils in Signalrichtung zwischen dem rotierenden Element (101) und der Abtastvorrichtung (104) angeordnet sind,

wobei das erste Tiefpassfilter ($105_1$) ausgestaltet ist, um das zeitabhängige Vibrationssignal s(t) des rotierenden Elements (101) zu filtern und daraus ein erstes tiefpassgefiltertes Vibrationssignal $s_{TP1}(t)$ zu erzeugen, und
wobei das zweite Tiefpassfilter ($105_2$) ausgestaltet ist, um das zeitabhängige Vibrationssignal s(t) des rotierenden Elements (101) oder das erste tiefpassgefilterte Vibrationssignal $s_{TP1}(t)$ zu filtern und daraus ein zweites tiefpassgefiltertes Vibrationssignal $s_{TP2}(t)$ zu erzeugen,
wobei das erste Tiefpassfilter ($105_1$) eine erste Grenzfrequenz $f_{G1}(t) = R_{max} \cdot f_A(t)$ aufweist, wobei $f_A(t)$ das modifizierte zeitabhängige Drehzahlsignal des rotierenden Elements und $R_{max}$ ein Maximalwert einer Ordnung in einem Ordnungsspektrum ist, wobei für den Faktor $R_{max}$ die Bedingung $R_{max} < N/2$ mit dem reellwertigen Faktor $N$ gilt, und
wobei das zweite Tiefpassfilter ($105_2$) eine zweite Grenzfrequenz $f_{G2}(t) = R_{max} \cdot f_{A2}(t)$ aufweist, wobei $f_{A2}(t)$ das zweite modifizierte zeitabhängige Drehzahlsignal des rotierenden Elements und $R_{max}$ ein Maximalwert einer Ordnung in einem Ordnungsspektrum ist, wobei für den Faktor $R_{max}$ die Bedingung $R_{max} < N_2/2$ mit dem zweiten reellwertigen Faktor $N_2$ gilt.

**9.** Vorrichtung (100) nach Anspruch 8, wobei die Vorrichtung (100) eine Signalkombiniervorrichtung (108) aufweist, die ausgestaltet ist, um das erste tiefpassgefilterte Vibrationssignal $s_{TP1}(t)$ und das zweite tiefpassgefilterte Vibrationssignal $s_{TP2}(t)$ miteinander zu kombinieren und ein kombiniertes Signal (109) zu erzeugen, wobei das kombinierte Signal (109) in die Abtastvorrichtung (104) geleitet und von der Abtastvorrichtung (104) abgetastet wird, um das zeitdiskrete Vibrationssignal $s_A(n)$ zu erzeugen.

**10.** Vorrichtung (100) nach einem der vorhergehenden Ansprüche, wobei die Vorrichtung (100) ausgebildet ist, um ein mit einer äquidistanten Abtastrate $\boldsymbol{f_S}$ abgetastetes zeitdiskretes Vibrationssignal x(n) mit einer mit einem reellwertigen Oversampling-Faktor OS multiplizierten Grundfrequenz $f_a = OS \cdot f_S$ überabzutasten und ein überabgetastetes Vibrationssignal $x_{OS}(n)$ zu erzeugen, wobei die Abtastvorrichtung (104) ausgebildet ist, um dieses überabgetastete Vibrationssignal $x_{OS}(n)$ wie das zeitabhängige Vibrationssignal s(t) zu behandeln und dieses mit dem modifizierten Drehzahlsignal $f_A$ abzutasten.

**11.** Vorrichtung (100) nach einem der vorhergehenden Ansprüche, wobei die Vorrichtung (100) ferner eine Auswertevorrichtung (107) aufweist, die ausgebildet ist, um eine bispektrale Ordnungsanalyse des zeitdiskreten Vibrationssignals $s_A(n)$ auszuführen und dabei mindestens zwei Ordnungsspektren des zeitdiskreten Vibrationssignals $s_A(n)$ miteinander zu korrelieren, um mittels der bispektralen Ordnungsanalyse eine Aussage über eine Anzahl von Defektquellen des rotierenden Elements (101) zu ermitteln.

**12.** Verfahren (900) zum Überwachen eines rotierenden Elements (101), wobei das Verfahren (900) die folgenden Schritte aufweist:

Empfangen eines von dem rotierenden Element (101) ausgehenden zeitabhängigen Vibrationssignals s(t) und eines Drehzahlsignals $f_B$ des rotierenden Elements (101),
Modifizieren des Drehzahlsignals $f_B$ und Ausgeben eines modifizierten Drehzahlsignals $f_A$,
Abtasten des zeitabhängigen Vibrationssignals s(t) unter Verwendung des modifizierten Drehzahlsignals $f_A$ als Abtastrate zum Erzeugen eines zeitdiskreten Vibrationssignals $s_A(n)$,
wobei das modifizierte Drehzahlsignal $f_A$ ein mit einem reellwertigen Faktor N multipliziertes Vielfaches des Drehzahlsignals $f_B$ ist, und
Modifizieren des Drehzahlsignals $f_B$ und Ausgeben eines zweiten modifizierten Drehzahlsignals $f_{A2}$, wobei das zweite modifizierte Drehzahlsignal $f_{A2}$ ein mit einem zweiten reellwertigen Faktor $N_2$ multipliziertes Vielfaches des Drehzahlsignals $f_B$ ist.

**13.** Verfahren (900) nach Anspruch 12, wobei das Verfahren (900) ferner den folgenden Schritt aufweist:

Ausführen einer Ordnungsanalyse des zeitdiskreten Vibrationssignals $s_A(n)$ und Bestimmen von mindestens einer Ordnung des zeitdiskreten Vibrationssignals $s_A(n)$, um hierüber eine Aussage über den Zustand des rotierenden Elements (101) zu ermitteln, und/oder
Ausführen einer bispektralen Ordnungsanalyse des zeitdiskreten Vibrationssignals $s_A(n)$ mittels Korrelieren von mindestens zwei Ordnungsspektren des zeitdiskreten Vibrationssignals $s_A(n)$, um mittels der bispektralen Ordnungsanalyse eine Aussage über eine Anzahl von Defektquellen des rotierenden Elements (101) zu ermitteln.

**14.** Verfahren (900) nach einem der Ansprüche 12 oder 13, wobei das Verfahren ferner die folgenden Schritte aufweist:
Tiefpassfiltern des zeitabhängigen Vibrationssignals s(t) des rotierenden Elements (101) und Erzeugen eines tiefpassgefilterten Vibrationssignals $s_{TP}(t)$, wobei das Tiefpassfiltern mit einer Grenzfrequenz $f_G(t) = R_{max} \cdot f_B(t)$ geschieht, wobei $f_G(t)$ die zeitabhängige Grenzfrequenz des eingesetzten Tiefpassfilters, $f_B(t)$ das zeitabhängige Drehzahlsignal des rotierenden Elements und $R_{max}$ ein Maximalwert einer Ordnung in einem Ordnungsspektrum ist, wobei für den Faktor $R_{max}$ die Bedingung $R_{max} < N/2$ mit dem reellwertigen Faktor $N$ gilt.

**15.** Computerprogramm mit einem Programmcode zur Durchführung des Verfahrens (900) nach einem der Ansprüche 12 bis 14 mit einer Vorrichtung nach einem der Ansprüche 1 bis 11.

## Claims

**1.** Device (100) for monitoring a rotating element (101), the device (100) comprising:

a signal input (102) configured to receive a time-dependent vibration signal s(t) emanating from the rotating element (101), and a rotational-speed signal $f_B$ of the rotating element (101),
a signal modification device (103) configured to modify the rotational-speed signal $f_B$ and to output a modified rotational-speed signal $f_A$,
a sampling device (104) configured to sample the time-dependent vibration signal s(t) while using the modified rotational-speed signal $f_A$ as a sampling rate and to generate a time-discrete vibration signal $s_A(n)$,
**characterized in that** the modified rotational-speed signal $f_A$ is a multitude of the rotational-speed signal $f_B$ that is multiplied by a real-valued factor $N$,
the device (100) comprising a second signal modification device ($103_2$) configured to modify the rotational-speed signal $f_B$ and to output a second modified rotational-speed signal $f_{A2}$, the second modified rotational-speed signal $f_{A2}$ being a multitude of the rotational-speed signal $f_B$ multiplied by a second real-valued factor $N_2$.

**2.** Device (100) as claimed in claim 1, the device (100) further comprising an evaluation device (107) configured to perform an order analysis of the time-discrete vibration signal $s_A(n)$ while determining at least one order of the time-discrete vibration signal $s_A(n)$ so as to obtain, in this manner, information about the state of the rotating element (101).

**3.** Device (100) as claimed in claims 1 or 2,

wherein the signal modification device (103) is configured to modify the rotational-speed signal $f_B$ while applying the formula $f_A = N \cdot f_B$, wherein $N$ is a real-valued factor, and $f_A$ is the modified rotational-speed signal,
wherein the real-valued factor $N$ is determined by an order to be examined at a maximum and/or by a highest acoustic spectral component to the expected, the real-valued factor $N$ being smaller than 100, or preferably smaller than 20.

**4.** Device (100) as claimed in any of the previous claims, the device (100) being configured to generate the time-discrete vibration signal $s_A(n)$ within a time period during which the rotational speed of the rotating element (101) changes.

**5.** Device (100) as claimed in any of the previous claims, the device (100) further comprising a low-pass filter (105), the low-pass filter (105) being arranged, in the direction of the signal, between the rotating element (101) and the sampling device (104), the low-pass filter (105) being configured to filter the time-dependent vibration signal s(t) of the rotating element (101) and to generate therefrom a low-pass filtered vibration signal $s_{TP}(t)$,
wherein the low-pass filter (105) comprises a cutoff frequency $f_G(t) = R_{max} \cdot f_A(t)$, wherein $f_G(t)$ is the time-dependent cutoff frequency of the low-pass filter, $f_A(t)$ is the modified time-dependent rotational-speed signal of the rotating element, and $R_{max}$ is a maximum value of an order within a order spectrums, wherein the condition $R_{max} < N/2$, with the real-valued factor N, applies to the factor $R_{max}$.

**6.** Device (100) as claimed in any of the previous claims, wherein the value of the second real-valued factor $N_2$ differs from the value of the real-valued factor $N$.

**7.** Device as claimed in any of the previous claims, wherein the sampling device (104) is configured to use the modified rotational-speed signal $f_A$ or the second modified rotational-speed signal $f_{A2}$ as the sampling rate.

**8.** Device (100) as claimed in any of the previous claims, the device (100) comprising a first low-pass filter ($105_1$) and a second low-pass filter ($105_2$), the first and second low-pass filters ($105_1$, $105_2$) each being arranged, in the direction of the signal, between the rotating element (101) and the sampling device (104),

wherein the first low-pass filter ($105_1$) is configured to filter the time-dependent vibration signal s(t) of the rotating element (101) and to generate therefrom a first low-pass filtered vibration signal $s_{TP1}(t)$, and
wherein the second low-pass filter ($105_2$) is configured to filter the time-dependent vibration signal s(t) of the rotating element (101) or the first low-pass filtered vibration signal $s_{TP1}(t)$ and to generate therefrom a second low-pass filtered vibration signal $s_{TP2}(t)$,
wherein the first low-pass filter ($105_1$) comprises a first cutoff frequency $f_{G1}(t) = R_{max} \cdot f_A(t)$, wherein $f_A(t)$ is the modified time-dependent rotational-speed signal of the rotating element, and $R_{max}$ is a maximum value of an order within a order spectrums, wherein the condition $R_{max} < N/2$, with the real-valued factor $N$, applies to the factor $R_{max}$, and
wherein the second low-pass filter ($105_2$) comprises a second cutoff frequency $f_{G2}(t) = R_{max} \cdot f_{A2}(t)$, wherein $f_{A2}(t)$ is the second modified time-dependent rotational-speed signal of the rotating element, and $R_{max}$ is a maximum value of an order within a order spectrums, wherein the condition $R_{max} < N_2/2$, with the second real-valued factor $N_2$, applies to the factor $R_{max}$.

**9.** Device (100) as claimed in claim 8, the device (100) comprising a signal combining device (108) configured to combine the first low-pass filtered vibration signal $s_{TP1}(t)$ and the second low-pass filtered vibration signal $s_{TP2}(t)$ with each other and to generate a combined signal (109), the combined signal (109) being guided into the sampling device (104) and being sampled by the sampling device (104) so as to generate the time-discrete vibration signal $s_A(n)$.

**10.** Device (100) as claimed in any of the previous claims, the device (100) being configured to oversample a time-discrete vibration signal x(n), which has been sampled at an equidistant sampling rate $f_S$, at a fundamental frequency $f_a = OS \cdot f_S$ that has been multiplied by a real-valued oversampling factor OS, and to generate an oversampled vibration signal $x_{OS}(n)$, the sampling device (104) being configured to treat said oversampled vibration signal $x_{OS}(n)$ as the time-dependent vibration signal s(t) and to sample same with the modified rotational-speed signal $f_A$.

**11.** Device (100) as claimed in any of the previous claims, the device (100) further comprising an evaluation device (107) configured to perform a bi-spectral order analysis of the time-discrete vibration signal $s_A(n)$ while correlating at least two order spectra of the time-discrete vibration signal $s_A(n)$ with one another so as to obtain, by means of the bi-spectral order analysis, information about a number of defect sources of the rotating element (101).

**12.** Method (900) of monitoring a rotating element (101), the method (900) comprising:

receiving a time-dependent vibration signal s(t) emanating from the rotating element (101), and a rotational-speed signal $f_B$ of the rotating element (101),
modifying the rotational-speed signal $f_B$ and outputing a modified rotational-speed signal $f_A$,
sampling the time-dependent vibration signal s(t) while using the modified rotational-speed signal $f_A$ as a sampling rate for generating a time-discrete vibration signal $s_A(n)$,
wherein the modified rotational-speed signal $f_A$ is a multitude of the rotational-speed signal $f_B$ that is multiplied by a real-valued factor $N$, and modifying the rotational-speed signal $f_B$ and outputting a second modified rotational-speed signal $f_{A2}$, the second modified rotational-speed signal $f_{A2}$ being a multitude of the rotational-speed signal $f_B$ multiplied by a second real-valued factor $N_2$.

**13.** Method (900) as claimed in claim 12, the method (900) further comprising:

performing an order analysis of the time-discrete vibration signal $s_A(n)$ and determining at least one order of the time-discrete vibration signal $s_A(n)$ so as to obtain, in this manner, information about the state of the rotating element (101), and/or
performing a bi-spectral order analysis of the time-discrete vibration signal $s_A(n)$ by correlating at least two order spectra of the time-discrete vibration signal $s_A(n)$ with one another so as to obtain, by means of the bi-spectral order analysis, information about a number of defect sources of the rotating element (101).

**14.** Method (900) as claimed in any of claims 12 or 13, the method further comprising:
low-pass filtering of the time-dependent vibration signal s(t) of the rotating element (101), and generating a low-pass filtered vibration signal $s_{TP}(t)$, said low-pass filtering being effected at a cutoff frequency $f_G(t) = R_{max} \cdot f_B(t)$, wherein $f_G(t)$ is the time-dependent cutoff frequency of the low-pass filter employed, $f_B(t)$ is the time-dependent rotational-speed signal of the rotating element, and $R_{max}$ is a maximum value of an order within a order spectrums, wherein the condition $R_{max} < N/2$, with the real-valued factor $N$, applies to the factor $R_{max}$.

**15.** Computer program comprising a program code for performing the method (900) as claimed in any of claims 12 to 14 by means of a device as claimed in any of claims 1 to 11.

## Revendications

**1.** Dispositif (100) pour surveiller un élément rotatif (101), le dispositif (100) présentant:

une entrée de signal (102) qui est conçue pour recevoir un signal de vibration en fonction du temps s(t) émanant de l'élément rotatif (101) et un signal de nombre de tours $\boldsymbol{f_B}$ de l'élément rotatif (101),
un dispositif de modification de signal (103) qui est conçu pour modifier le signal de nombre de tours $\boldsymbol{f}_{\mathrm{B}}$ et pour sortir un signal de nombre de tours modifié $\boldsymbol{f_A}$,
un dispositif de balayage (104) qui est conçu pour balayer le signal de vibration en fonction du temps s(t) à l'aide du signal de nombre de tours modifié $\boldsymbol{f_A}$ comme fréquence de balayage et pour générer un signal de vibration discret dans le temps $\mathbf{s}_{\mathrm{A}}(n)$,
**caractérisé par le fait que** le signal de nombre de tours modifié $\boldsymbol{f_A}$ est un multiple du signal de nombre de tours $\boldsymbol{f_B}$ qui est multiplié par un facteur de valeur réelle $N$,
le dispositif (100) présentant un deuxième dispositif de modification de signal ($103_2$) qui est conçu pour modifier le signal de nombre de tours $\boldsymbol{f_B}$ et pour sortir un deuxième signal de nombre de tours modifié $\boldsymbol{f_{A2}}$, où le deuxième signal de nombre de tours modifié $\boldsymbol{f_{A2}}$ est un multiple du signal de nombre de tours $\boldsymbol{f_B}$ qui est multiplié par un facteur de valeur réelle $N_2$.

**2.** Dispositif (100) selon la revendication 1,
le dispositif (100) présentant par ailleurs un dispositif d'évaluation (107) qui est conçu pour effectuer une analyse d'ordre du signal de vibration discret dans le temps $s_A(n)$ et pour déterminer au moins un ordre du signal de vibration discret dans le temps $s_A(n)$ pour déterminer une information relative à l'état de l'élément rotatif (101).

**3.** Dispositif (100) selon la revendication 1 ou 2,

dans lequel le dispositif de modification de signal (103) est conçu pour modifier le signal de nombre de tours $\boldsymbol{f_B}$ à l'aide de la formule $f_A = N \cdot f_B$, où $N$ est un facteur de valeur réelle et $\boldsymbol{f_A}$ est le signal de nombre de tours modifié,
dans lequel le facteur de valeur réelle $N$ se base sur un ordre maximum à examiner et/ou sur une part spectrale acoustique à attendre la plus élevée, dans lequel le facteur de valeur réelle $N$ est inférieur à 100, ou de préférence inférieur à 20.

**4.** Dispositif (100) selon l'une des revendications précédentes, dans lequel le dispositif (100) est conçu pour générer le signal de vibration discret dans le temps $\mathbf{s}_A(n)$ dans un laps de temps pendant lequel change le nombre de tours de l'élément rotatif (101).

**5.** Dispositif (100) selon l'une des revendications précédentes, le dispositif (100) présentant par ailleurs un filtre passe-bas (105), dans lequel le filtre passe-bas (105) est disposé dans la direction du signal entre l'élément rotatif (101) et le dispositif de balayage (104), dans lequel le filtre passe-bas (105) est conçu pour filtrer le signal de vibration en fonction du temps s(t) de l'élément rotatif (101) et pour générer à partir de ce dernier un signal de vibration filtré passe-bas $\mathbf{s}_{TP}(t)$,
dans lequel le filtre passe-bas (105) présente une fréquence de coupure $f_G(t) = R_{max} \cdot f_A(t)$, où $f_G(t)$ est la fréquence de coupure en fonction du temps du filtre passe-bas, $f_A(t)$ est le signal de nombre de tours en fonction du temps modifié de l'élément rotatif et $R_{max}$ est une valeur maximale d'un ordre dans un spectre d'ordre, où pour le facteur $R_{max}$ est d'application la condition $R_{max} < N/2$ avec le facteur réel $N$.

**6.** Dispositif (100) selon l'une des revendications précédentes, dans lequel la valeur du deuxième facteur de valeur réelle $N_2$ diffère de la valeur du facteur de valeur réelle $N$.

**7.** Dispositif selon l'une des revendications précédentes, dans lequel le dispositif de balayage (104) est conçu pour utiliser comme fréquence de balayage le signal de nombre de tours modifié $\boldsymbol{f_A}$ ou le deuxième signal de nombre de tours modifié $\boldsymbol{f_{A2}}$.

**8.** Dispositif (100) selon l'une des revendications précédentes, le dispositif (100) présentant un premier filtre passe-bas ($105_1$) et un deuxième filtre passe-bas ($105_2$), dans lequel le premier et le deuxième filtre passe-bas ($105_1$, $105_2$) sont disposés, chacun, dans la direction du signal entre l'élément rotatif (101) et le dispositif de balayage (104),

dans lequel le premier filtre passe-bas ($105_1$) est conçu pour filtrer le signal de vibration en fonction du temps s(t) de l'élément rotatif (101) et pour générer à partir de ce dernier un premier signal de vibration filtré passe-bas $\mathbf{s}_{TP1}(t)$, et
dans lequel le deuxième filtre passe-bas (1052) est conçu pour filtrer le signal de vibration en fonction du temps s(t) de l'élément rotatif (101) ou le premier signal de vibration filtré passe-bas $\mathbf{s}_{TP1}(t)$ et pour générer à partir de ce dernier un deuxième signal de vibration filtré passe-bas $\mathbf{s}_{TP2}(t)$,
dans lequel le premier filtre passe-bas ($105_1$) présente une première fréquence de coupure $f_{G1}(t) = R_{max} \cdot f_A(t)$, où $f_A(t)$ est le signal de nombre de tours en fonction du temps modifié de l'élément rotatif et $R_{max}$ est une valeur maximale d'un ordre dans un spectre d'ordre, où pour le facteur $R_{max}$ est d'application la condition $R_{max} < N/2$ avec le facteur de valeur réelle $N$, et
dans lequel le deuxième filtre passe-bas ($105_2$) présente une deuxième fréquence de coupure $f_{G2}(t) = R_{max} \cdot f_{A2}(t)$, où $f_{A2}(t)$ est le deuxième signal de nombre de tours en fonction du temps modifié de l'élément rotatif et $R_{max}$ est une valeur maximale d'un ordre dans un spectre d'ordre, où pour le facteur $R_{max}$. est d'application la condition $R_{max} < N_2/2$ avec le deuxième facteur de valeur réelle $N_2$.

**9.** Dispositif (100) selon la revendication 8, le dispositif (100) présentant un dispositif de combinaison de signaux (108) qui est conçu pour combiner l'un avec l'autre le premier signal de vibration filtré passe-bas $\mathbf{s}_{TP1}(t)$ et le deuxième signal de vibration filtré passe-bas $\mathbf{s}_{TP2}(t)$ et pour générer un signal combiné (109), dans lequel le signal combiné (109) est guidé vers le dispositif de balayage (104) et est balayé par le dispositif de balayage (104) pour générer le signal de vibration discret dans le temps $\mathbf{s}_A(n)$.

**10.** Dispositif (100) selon l'une des revendications précédentes, le dispositif (100) étant conçu pour recevoir un signal de vibration discret dans le temps x(n) balayé à une fréquence de balayage équidistante $\boldsymbol{f_s}$ à une fréquence de base multipliée par un facteur de sur-balayage de valeur réelle OS $f_a = OS \cdot f_s$ et pour générer un signal de vibration sur-balayé $\mathbf{x}_{OS}(n)$, dans lequel le dispositif de balayage (104) est conçu pour traiter ce signal de vibration sur-balayé $\mathbf{x}_{OS}(n)$ comme le signal de vibration en fonction du temps s(t) et pour balayer ce dernier par le signal de nombre de tours modifié $\boldsymbol{f_A}$.

**11.** Dispositif (100) selon l'une des revendications précédentes, le dispositif (100) présentant par ailleurs un dispositif d'évaluation (107) qui est conçu pour effectuer une analyse d'ordre bi-spectrale du signal de vibration discret dans le temps $\mathbf{s}_A(n)$ et pour corréler l'un avec l'autre au moins deux spectres d'ordre du signal de vibration discret dans le temps $\mathbf{s}_A(n)$ pour déterminer au moyen de l'analyse d'ordre bispectrale une information relative à un nombre de sources de défauts de l'élément rotatif (101).

**12.** Procédé (900) de surveillance d'un élément rotatif (101), le procédé (900) présentant les étapes suivantes consistant à:

recevoir un signal de vibration en fonction du temps s(t) émanant de l'élément rotatif (101) et un signal de nombre de tours $\boldsymbol{f_B}$ de l'élément rotatif (101),
modifier le signal de nombre de tours $\boldsymbol{f_B}$ et sortir un signal de nombre de tours modifié $\boldsymbol{f_A}$,
balayer le signal de vibration en fonction du temps s(t) à l'aide du signal de nombre de tours modifié $\boldsymbol{f_A}$ comme fréquence de balayage pour générer un signal de vibration discret dans le temps $\mathbf{s}_A(n)$,
dans lequel le signal de nombre de tours modifié $\boldsymbol{f_A}$ est un multiple du signal de nombre de tours $\boldsymbol{f_B}$ qui est multiplié par un facteur de valeur réelle *N,* et
modifier le signal de nombre de tours $\boldsymbol{f}_\mathrm{B}$ et sortir un deuxième signal de nombre de tours modifié $\boldsymbol{f_{A2}}$, où le deuxième signal de nombre de tours modifié $\boldsymbol{f_{A2}}$ est un multiple du signal de nombre de tours $\boldsymbol{f_B}$ qui est multiplié par un deuxième facteur de valeur réelle $N_2$.

**13.** Procédé (900) selon la revendication 12, le procédé (900) présentant par ailleurs les étapes suivantes consistant à:

effectuer une analyse d'ordre du signal de vibration discret dans le temps $\mathbf{s}_A(n)$ et déterminer au moins un ordre du signal de vibration discret dans le temps $\mathbf{s}_A(n)$ pour déterminer ainsi une information relative à l'état de l'élément rotatif (101), et/ou
effectuer une analyse d'ordre bi-spectrale du signal de vibration discret dans le temps $\mathbf{s}_A(n)$ en corrélant au moins deux spectres d'ordre du signal de vibration discret dans le temps $\mathbf{s}_A(n)$ pour déterminer au moyen de l'analyse d'ordre bi-spectrale une information relative à un nombre de sources de défauts de l'élément rotatif (101).

**14.** Procédé (900) selon l'une quelconque des revendications 12 ou 13, le procédé présentant par ailleurs les étapes suivantes consistant à:
filtrer passe-bas le signal de vibration en fonction du temps s(t) de l'élément rotatif (101) et générer un signal de vibration filtré passe-bas $\mathbf{s}_{TP}(t)$, où le filtrage passe-bas a lieu au moyen d'une fréquence de coupure $f_G(t) = R_{max} \cdot f_B(t)$, où $f_G(t)$ est la fréquence de coupure en fonction du temps du filtre passe-bas utilisé, $f_B(t)$ est le signal de nombre de tours en fonction du temps de l'élément rotatif et $R_{max}$ est une valeur maximale d'un ordre dans un spectre d'ordre, où pour le facteur $R_{max}$ est d'application la condition $R_{max} < N/2$ avec le facteur de valeur réelle *N.*

**15.** Programme d'ordinateur avec un code de programme pour mettre en œuvre le procédé (900) selon l'une des revendications 12 à 14 par un dispositif selon l'une des revendications 1 à 11.

101
s(t)
$f_B$
102
100
$f_B$
s(t)
$N \cdot f_B$
103
104
$f_A$
107
$s_A(n)$

Fig. 1

Zeit-Frequenz-Verteilung (SPWD) Vibrationssignal
Frequenz / Hz
2000
1800
1600
1400
1200
1000
800
600
400
200
0
Zeit / s
0
2
4
6
8
10
12
14
16
18
20
201
202
203
204
205
206
207
208

Fig. 2

Ordnungsspektrum nach zeitvarianter Analyse
Pegel / dB
0
-10
-20
-30
-40
-50
-60
Ordnung
0
5
10
15

Fig. 3

Ordnungsspektrum nach drehsynchroner Abtastung
Pegel / dB
5
0
-5
-10
-15
-20
-25
-30
-35
-40
-45
0
2
4
6
8
10
12
14
16
18
20
Ordnung
401
402
403
404
405

Fig. 4

101
100
106
Drehfrequenz $f_B$
Körperschall s(t)
103
$N \cdot f_B$
$f_A$
$f_A$
$s_{TP}(t)$
105
104
$s_A(n)$
107

Fig. 5A

101
106
100
Körperschall s(t)
Drehfrequenz $f_B$
$105_1$
$f_{A1}$
$N_1 \cdot f_B$
$103_1$
$f_{A1}$
$s_{TP1}(t)$
108
104
107
109
$105_2$
$f_{A2}$
$N_2 \cdot f_B$
$103_2$
$s_A(n)$
$s_{TP2}(t)$
+
−
$s_{TP1}(t)$
$s_{TP2}(t)$


Fig. 5B

Zeit-Frequenz-Verteilung (SPWD) Ordnungssignal
Ordnung
20
18
16
14
12
10
8
6
4
2
0
0
100
200
300
400
500
600
700
800
900
# Umdrehungen
401
402
403
404
405

Fig. 6

Ordnungs-Bispektrum
Ordnung 1
Ordnung 2
0
2
4
6
8
10
12
$401_1$
$402_1$
$403_1$
$404_1$
$405_1$
$401_2$
$402_2$
$403_2$
$404_2$
$405_2$

Fig. 7

SPWD mit Harmonischen und Ordnungen (1,3,4,7,11.2)
Frequenz / Hz
Zeit / s
0
200
400
600
800
1000
1200
1400
1600
1800
0
2
4
6
8
10
12
14
16
18
801
802
803
804
805
806
807
808

Fig. 8A

Ordergramm mit Harmonischen und Ordnungen (1,3,4,7,11,2)
Ordnung
# Umdrehungen
0
5
10
15
20
25
100
200
300
400
500
600
700
800
900
801
802
803
804
805
806
807
808

Fig. 8B

Ordnungsbispektrum
0,045
0,04
0,035
0,03
0,025
0,02
0,015
0,01
0,005
0
Ordnung 2/100
0
0,005
0,01
0,015
0,02
0,025
0,03
0,035
0,04
0,045
Ordnung 1/100
810
809
810
809

Fig. 8C

900

Empfangen eines von einem rotierenden Element ausgehenden zeitabhängiges Vibrationssignal s(t) sund eines Drehzahlsignal $f_B$ des rotierenden Elements — 910

Modifizieren des Drehzahlsignals $f_B$ und Ausgeben eines modifizierten Drehzahlsignal $f_A$, wobei das modifizierte Drehzahlsignal $f_A$ ein mit einem reellwertigen Faktor N multipliziertes Vielfaches des Drehzahlsignals $f_B$ ist — 911

Abtasten des zeitabhängigen Vibrationssignals s(t) unter Verwendung des modifizierten Drehzahlsignals $f_A$ als Abtastrate zum Erzeugen eines zeitdiskretes Vibrationssignals $s_A(n)$ — 912

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102017200761
- US 9032803 B2
- US 2014352444 A1